(19) Europäisches Patentamt
European Patent Office
Office européen des brevets

(11) **EP 2 833 667 B1**

## (12) EUROPEAN PATENT SPECIFICATION

(45) Date of publication and mention
of the grant of the patent:
**20.04.2016  Bulletin 2016/16**

(51) Int Cl.:
*H04W 28/02* *(2009.01)*      *H04W 72/12* *(2009.01)*

(21) Application number: **14178728.3**

(22) Date of filing: **28.07.2014**

(54) **Transmitting device, receiving device, in-vehicle communication system, and in-vehicle communication method**

Sendevorrichtung, Empfangsvorrichtung, fahrzeuginternes Kommunikationssystem und fahrzeuginternes Kommunikationsverfahren

Dispositif de transmission, dispositif de réception, système de communication embarqué et procédé de communication embarqué

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2013   JP 2013159291**
**26.05.2014   JP 2014107662**

(43) Date of publication of application:
**04.02.2015   Bulletin 2015/06**

(73) Proprietor: **Mitsubishi Electric Corporation Chiyoda-ku Tokyo 100-8310 (JP)**

(72) Inventor: **Shida, Tetsuro Tokyo, 100-8310 (JP)**

(74) Representative: **Hoffmann Eitle Patent- und Rechtsanwälte PartmbB Arabellastraße 30 81925 München (DE)**

(56) References cited:
**US-A1- 2012 079 149     US-A1- 2013 039 354**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### TECHNICAL FIELD

The present invention relates to a transmitting device and a receiving device that can be mounted or carried in a vehicle, to an in-vehicle communication system, and to an in-vehicle communication method used in the in-vehicle communication system.

### BACKGROUND ART

Some conventional in-vehicle communication systems including a transmitting device that can be carried or mounted in a vehicle such as a train or car and a receiving device that receives data transmitted by the transmitting device employ a plurality of transmission channels to improve the quality of communication between the transmitting and receiving devices. A communication channel is a channel used for communication between the transmitting device and the receiving device, and may also be referred to as a traffic transfer path in a network. Since communication quality is affected by the communication methods and frequencies used for communication, even when the positions of the transmitting device and receiving device are the same, differences in communication quality may arise from the use of different communication channels or different frequencies.

In-vehicle communication systems that use a plurality of communication channels therefore select the optimal communication channel from among the plurality of available communication channels according to the characteristics and communication status of each of the communication channels.

When communication channel selection is executed by manual switching, the necessary procedures become a nuisance for the user. Japanese Patent Application Publication No. 2004-257412 (pages 9-18 and FIG. 1, for example) proposes a traffic transfer path selection method in which weights are defined for each link in a network according to the capabilities of the link, such as its capability to satisfy a delay requirement, and when communication is carried out, these weights are used in selecting the traffic transfer path.

When this weighting scheme is applied to an in-vehicle communication system network including a first communication channel using a first communication protocol with no transmission time restrictions and a second communication channel using a second communication protocol in which communication is limited to predetermined lengths of time in predetermined periods of time, however, in an environment with changing transmission conditions, if the second communication channel has a higher capability to satisfy delay requirements than the first communication channel, the second communication channel will be selected more often. A problem is that since the second communication channel uses a communication protocol that allows communication only within predetermined lengths of time, once the end of the predetermined length of time is reached, communication on the second communication channel is cut off. Even under communication conditions in which it is not possible to switch over to a communication channel other than the second communication channel, the second communication channel becomes unavailable, which means that the second communication channel cannot be used effectively. In a communication system having a transmitting device that transmits, as communication data, information that the receiving device processes at a set time or within a set time, a particular problem is that when the second communication channel becomes unavailable, the processing that the receiving device carries out cannot be completed at the scheduled time or within the scheduled time limit for execution of the processing.

Document US 2012/079149 A1, March 29, 2012 relates to vehicle internetworks for providing communications among diverse electronic devices within a vehicle, and for communications among these devices and networks external to the vehicle. The vehicle internetwork comprises specific devices, software, and protocols, and provides for security for essential vehicle functions and data communications. Document US 2012/079149 A1 further relates to a device comprising a first interface, a second interface and a computing device configured to access a first vehicle bus in a vehicle via the first interface and access a second vehicle bus in the vehicle via the second interface. The computing device is further configured to manage transmission of messages between the first vehicle bus and the second vehicle bus and authorize access to the first vehicle bus and the second vehicle bus.

### SUMMARY OF THE INVENTION

The present invention addresses these problems with the object of providing a transmitting device, a receiving device, an in-vehicle communication system, and an in-vehicle communication method that, in communication that can be carried out using either a first communication protocol that has no transmission time restrictions or a second communication protocol having a rule that communication data can only be transmitted within a predetermined transmission time limit in a predetermined transmission restriction management period, can use the second communication protocol effectively.

According to one aspect of the invention, a transmitting device (10, 11) includes: a first communication unit (101) for transmitting communication data by a first communication protocol; a second communication unit (102) for transmitting communication data by a second communication protocol differing from the first communication protocol, the second communication protocol having a rule that in a predetermined transmission restriction management period, communication data can only be transmitted within a predetermined transmission time limit; a scheduling unit (120) for determining an upper limit value for a time during which the second communication unit (102) is permitted to transmit communication data in the transmission restriction management period such that a total transmission time expended in the transmission of communication data using the second communication unit (102) in the transmission restriction management period does not exceed the transmission time limit; a communication status monitoring unit (105) for monitoring whether or not a transmission delay time exceeds a predetermined decision reference time, the transmission delay time being a time taken for transmission of communication data by the first communication unit (101) to begin; and a transmission command unit (130) for instructing the second communication unit (102) to transmit pending communication data when the communication status monitoring unit (105) finds that the transmission delay time exceeds the decision reference time and the total time taken by the second communication unit (102) to transmit the communication data does not exceed the determined upper limit value.

According to another aspect of the invention, a receiving device (30) includes: a third communication unit (301) for receiving first communication data transmitted from the first communication unit (101) of the above transmitting device (10); a fourth communication unit (302) for receiving second communication data transmitted from the second communication unit (102) of the above transmitting device (10); and a reception control unit (303) for, when communication data with identical content are received by the third communication unit (301) and the fourth communication unit (302), outputting either the communication data received by the third communication unit or the communication data received by the fourth communication unit.

The invention further provides an in-vehicle communication system including the above transmitting device, the above receiving device, and a current position acquisition unit for acquiring current position information and supplying the current position information to the transmitting device.

The invention also provides an in-vehicle communication method used by an in-vehicle communication system (1) in which communication between a transmitting device (10, 11) and a receiving device (30) is carried out by a first communication protocol and a second communication protocol, the second communication protocol having a rule that in a predetermined transmission restriction management period, communication data can only be transmitted within a predetermined transmission time limit. A transmitting process in the transmitting device (10, 11) includes: transmitting the communication data by the first communication protocol, determining an upper limit value for a time during which transmission of the communication data by the second communication protocol is permitted in the transmission restriction management period such that a total transmission time expended in the transmission of communication data by the second communication protocol in the transmission restriction management period does not exceed the transmission time limit, monitoring whether or not a transmission delay time exceeds a predetermined decision reference time, the transmission delay time being a time taken for transmission of communication data by the first communication protocol to begin, and transmitting the communication data by the second communication protocol when the transmission delay time is found to exceed the decision reference time and the total time taken to transmit the communication data by the second communication protocol does not exceed the determined upper limit value. A receiving process in the receiving device (30) includes when communication data with identical content are received by the first communication protocol and the second communication protocol, outputting either the communication data received by the first communication protocol or the communication data received by the second communication protocol.

The invention further provides an in-vehicle communication method used by an in-vehicle communication system (1) in which communication between a transmitting device (10, 11) and a receiving device (30) is carried out by a first communication protocol and a second communication protocol, the second communication protocol having a rule that in a predetermined transmission restriction management period, communication data can only be transmitted within a predetermined transmission time limit. A transmitting process in the transmitting device (10, 11) includes transmitting the communication data by the first communication protocol, dividing the transmission restriction management period into a plurality of time slots and assigning, in each of the plurality of time slots, a transmission enabled time in which use of the second communication protocol is permitted, monitoring whether or not a transmission delay time exceeds a predetermined decision reference time, the transmission delay time being a time taken for transmission of communication data by the first communication protocol to begin, and deciding, on a basis of the transmission enabled time assigned to a current time slot, whether or not to transmit the communication data by using the second communication protocol, and when the communication data are transmitted by use of the second communication protocol, storing a value obtained by subtracting the time used for transmission of the communication data by the second communication protocol from the transmission enabled time assigned to the current time slot as a remaining transmission enabled time assigned to the current time slot. A receiving process in the receiving device (30) includes when communication data with identical content are received by the first communication protocol and the second communication protocol, outputting either the communication data received by the first communication protocol or the communication data received by the second communication protocol.

In the present invention, when the transmission delay time in the first communication unit is found to exceed the decision reference time, if the total time taken by the second communication unit to transmit the communication data does not exceed the determined upper limit value, the second communication unit transmits the communication data. The present invention can therefore make effective use of a communication channel that permits communication only within a predetermined transmission time limit in each predetermined transmission restriction management period.

**BRIEF DESCRIPTION OF THE DRAWINGS**

In the attached drawings:

FIG. 1 is a block diagram showing the general configuration of a transmitting device, a receiving device, and an in-vehicle communication system according to a first embodiment of the invention;

FIG. 2 is a block diagram schematically showing the configuration of the transmitting device in the first embodiment;

FIG. 3 is a flowchart illustrating the main processes performed in the in-vehicle communication method according to the first embodiment;

FIG. 4 shows an exemplary time slot assignment list giving information about time slot assignments made by the transmission enabled time assignment unit in the transmitting device in the first embodiment in a single transmission restriction management period;

FIG. 5 shows an exemplary time slot assignment list giving information about time slot assignments made by the transmission enabled time assignment unit in the transmitting device in the first embodiment in the single transmission restriction management period after the elapse of one minute;

FIG. 6 shows another exemplary time slot assignment list giving information about time slot assignments made by the transmission enabled time assignment unit in the transmitting device in the first embodiment in the single transmission restriction management period after the elapse of one minute when the transmission enabled time during that one minute has been used up;

FIG. 7 shows an another exemplary time slot assignment list giving information about time slot assignments made by the transmission enabled time assignment unit in the transmitting device in the first embodiment in a single transmission restriction management period after the transmission enabled time during one minute has been used up;

FIG. 8 shows an exemplary time slot assignment list giving information about time slot assignments made by the transmission enabled time assignment unit in the transmitting device in the first embodiment in the next transmission restriction management period when that period starts after the preceding transmission restriction management period;

FIG. 9 is a block diagram schematically showing the configuration of the receiving device in the first embodiment;

FIG. 10 is a flowchart showing a process by which the communication data output decision unit in FIG. 9 decides whether to supply communication data received by the third and fourth communication units to the received data input unit;

FIG. 11 is a block diagram schematically showing the configuration of the transmitting device in a second embodiment;

FIG. 12 shows an exemplary future estimated position reference table possessed by the future position estimation unit in the transmitting device in the second embodiment;

FIG. 13 illustrates an exemplary relationship between the position of the transmitting device and time elapsed from the present time, based on the future estimated position reference table possessed by the future position estimation unit in the transmitting device in the second embodiment;

FIG. 14 shows an exemplary estimated future transmission request time reference table possessed by the time and position based transmission volume estimation unit in the transmitting device in the second embodiment;

FIG. 15 shows an exemplary time slot assignment list giving information about time slot assignments made by the transmission enabled time assignment unit in the transmitting device in the second embodiment in a single transmission restriction management period; and

FIG. 16 shows an exemplary future transmission request estimated time reference table possessed by the time and position based transmission volume estimation unit in the transmitting device in the second embodiment in a given range of time.

**DETAILED DESCRIPTION OF THE INVENTION**

Embodiments of the invention will now be described with reference to the attached drawings, in which like elements are indicated by like reference characters.

First Embodiment

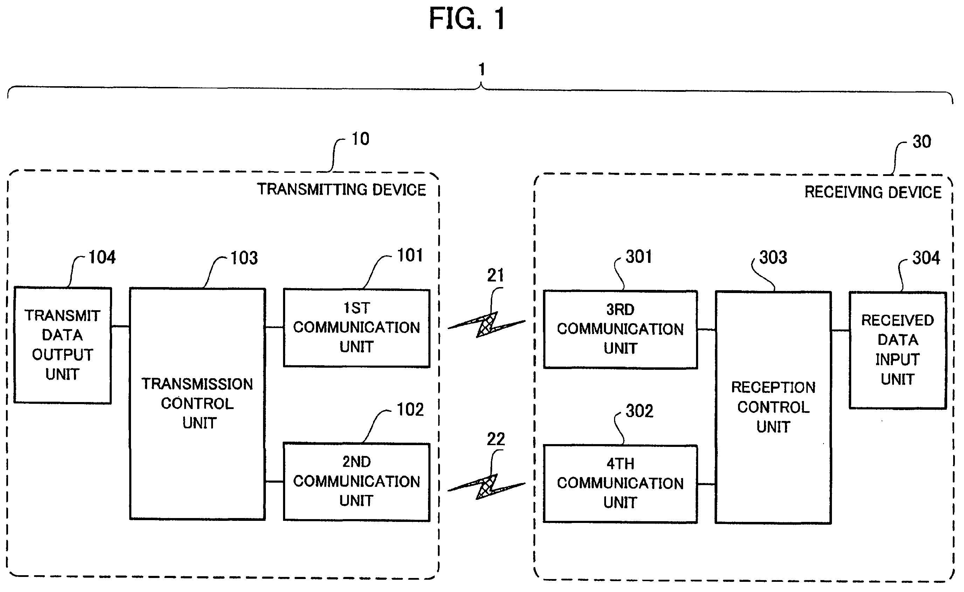

The block diagram in FIG. 1 shows the general configuration of a transmitting device 10, a receiving device 30, and an in-vehicle communication system 1 according to a first embodiment of the invention. As shown in FIG. 1, the in-vehicle communication system 1 includes the transmitting device 10 and receiving device 30. The in-vehicle communication system 1 is mountable in a moving vehicle such as, for example, a train or automobile. The in-vehicle communication system 1 is also a system capable of implementing an in-vehicle communication method according to the first embodiment. The transmitting device 10 and receiving device 30 in FIG. 1 are connected in such a way that they can communicate by using a plurality of communication channels (for example, by selectively using either a first communication channel 21 or a second communication channel 22). The transmitting device 10 may also be equipped to operate as a receiving device, and the receiving device 30 may also be equipped to operate as a transmitting device. The number of communication channels available in the in-vehicle communication system 1 is not limited to two; there may be three channels or more.

As shown in FIG. 1, the main components of the transmitting device 10 are a first communication unit 101 that performs data communication by a first communication protocol on the first communication channel 21, a second communication unit 102 that performs data communication by a second communication protocol on the first communication channel 21, a transmission control unit 103, and a transmit data output unit 104. The transmission control unit 103 carries out control that enables data supplied from the transmit data output unit 104 to be transmitted from one or both of the first and second communication units 101, 102 to the receiving unit 30.

The first communication protocol is any communication protocol that does not have a rule "in each of a predetermined periods (transmission restriction management periods), data transmission is permitted only within a predetermined transmission time limit" or "in each predetermined transmission restriction management period, communication data can only be transmitted within a predetermined transmission time limit." In other words, the first communication protocol may be any communication protocol that does not set transmission restriction management periods and restrict transmission time within each of the transmission restriction management periods. The predetermined transmission time limit in a transmission restriction management period is a total (total time) of transmission enabled time (transmission permitted time) in each of a plurality of time slots that will be described below. The first communication protocol may be, for example, a protocol for communication in a wireless local area network (LAN), such as the one of the IEEE 802.11b/g/n protocols established by the Institute of Electrical and Electronics Engineers. The first communication protocol is not limited, however, to these particular protocols.

The second communication protocol differs from the first communication protocol. One difference is that the second communication protocol restricts transmission time within a transmission restriction management period. The second communication protocol is any communication protocol that has a rule "in each of a predetermined transmission restriction management periods, data transmission is permitted only within a predetermined transmission time limit" or "in each predetermined transmission restriction management period, communication data can only be transmitted within a predetermined transmission time limit." In other words, the second communication protocol may be any communication protocol that sets transmission restriction management periods and restrict transmission time within each of the transmission restriction management periods. More specifically, the second communication protocol allows communication up to a predetermined transmission time limit in each predetermined transmission restriction management period, and does not allow transmission in excess of the transmission time limit. Exemplary communication protocols of this type include the Japanese Specified Low-Power Radio protocols. In these Specified Low-Power Radio communication protocols, the length of the transmission restriction management period is fixed at one hour, and the predetermined transmission time limit within that one-hour transmission restriction management period is 360 seconds.

The signal transmitted from the first communication unit 101 in the transmitting device 10 is carried over the first communication channel 21 and received by the third communication unit 301 in the receiving device 30. The signal transmitted from the second communication unit 102 in the transmitting device 10 is carried over the second communication channel 22 and received by the fourth communication unit 302 in the receiving device 30. The first communication channel 21 uses a carrier frequency stipulated in the first communication protocol. The second communication channel 22 uses a carrier frequency stipulated in the second communication protocol. Because of the wireless nature of the first and second communication protocols and the different noise components present at the carrier frequencies designated by the first and second communication protocols, even when the positional relationship between the transmitting device 10 and receiving device 30 is the same, the communication quality offered by the first and second communication protocols may differ.

As shown in FIG. 1, the main components of the receiving device 30 are a third communication unit 301 that performs data communication by the first communication protocol on the first communication channel 21, a fourth communication unit 302 that performs data communication by the second communication protocol on the first communication channel 21, a reception control unit 303, and a received data input unit 304. The third communication unit 301 receives a signal transmitted from the first communication unit 101 in the transmitting device 10 over the first communication channel 21 and converts the received signal to received data according to the first communication protocol. The fourth communication unit 302 receives a signal transmitted from the second communication unit 102 in the transmitting device 10 over the second communication channel 22 and converts the received signal to received data according to the second communication protocol. The reception control unit 303 in the receiving device 30 supplies the received data obtained by the third and fourth communication units 301, 302 to the received data input unit 304. In this process, the reception control unit 303 accepts communication data received by both the third and fourth communication units 301, 302, but if the third and fourth communication units 301, 302 have both received the same communication data, it selects one of the two sets of communication data and supplies the selected communication data to the received data input unit 304. The selection may be made as follows. In a first method, the reception control unit 303 acquires information indicating reliability or unreliability (presence of errors) at the time of reception of each set of communication data, and basis its selection on this or other similar information. In a second method, the reception control unit 303 selects the data that arrived first and ignores the data that arrived afterward. The reception control unit 303 is not limited to these selection methods, however.

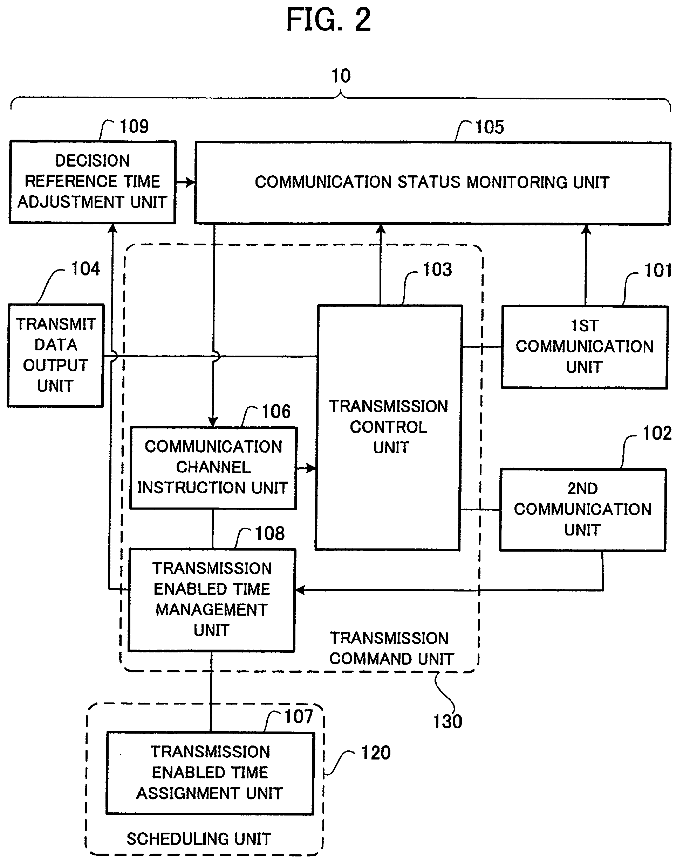

The block diagram in FIG. 2 shows the schematic configuration of the transmitting device 10 in the in-vehicle communication system 1 in the first embodiment of the present invention. As shown in FIG. 2, the transmitting device 10 includes, in addition to the elements shown in FIG. 1, a communication status monitoring unit 105, a communication channel instruction unit 106, a transmission enabled time assignment unit 107, a transmission enabled time management unit 108, and a decision reference time adjustment unit 109. The transmission enabled time assignment unit 107 constitutes a scheduling unit 120. The transmission control unit 103, communication channel instruction unit 106, and transmission enabled time management unit 108 constitute a transmission command unit 130. The scheduling unit 120 determines an upper limit value for the total communication data transmission time by the second communication unit 102 in each transmission restriction management period such that the total transmission time expended in the transmission of communication data using the second communication unit 102 in the transmission restriction management period does not exceed the transmission time limit. The transmission command unit 130 monitors whether or not a transmission delay time exceeds a predetermined decision reference time, the transmission delay time being the time taken for transmission of communication data by the first communication unit 101 to begin. When the communication status monitoring unit 105 finds that the transmission delay time exceeds the decision reference time, the transmission command unit 130 instructs the second communication unit 102 to transmit the pending communication data, provided this does not cause the total communication data transmission time used by the second communication unit 102 to exceed the above upper limit value.

The transmission enabled time assignment unit 107 in the scheduling unit 120 preferably divides the transmission restriction management period into a plurality of time slots, in each of which it assigns a transmission enabled time during which use of the second communication unit 102 is permitted.

The transmission enabled time management unit 108 in the transmission command unit 130 stores the transmission enabled times assigned by the transmission enabled time assignment unit 107, and when the communication status monitoring unit 105 finds that the transmission delay time exceeds the decision reference time, the transmission enabled time management unit 108 decides on the basis of the transmission enabled time assigned to the time slot corresponding to the current time, that is, to the current time slot, whether or not to use the second communication unit 102; when communication data have been transmitted using the second communication unit 102, the transmission enabled time management unit 108 preferably stores a value obtained by subtracting the time used by the second communication unit 102 to transmit the communication data from the transmission enabled time assigned to the current time slot as an updated transmission enabled time, referred to below as a remaining transmission enabled time. When the transmission enabled time management unit 108 decides to use the second communication unit 102, the transmission control unit 103 in the transmission command unit 130 preferably instructs the second communication unit 102 to transmit the pending communication data.

The transmission delay time referred to here is the time from when the transmit data output unit 104 gives the instruction to transmit the communication data until the first communication unit 101 actually starts transmitting. When the transmission control unit 103 gives the first communication unit 101 a transmission instruction, the first communication unit 101 checks the communication status of the first communication channel 21 and does not actually start transmitting until it decides that transmission is possible. The first communication unit 101 checks the communication status of the first communication channel 21 by, for example, the carrier sense method, in which the first communication unit 101 senses the received power level at the carrier frequency on the first communication channel 21, performs the transmission if the sensed received power level is equal to or less than a certain threshold value, and does not transmit if the power level is higher than the threshold value. In this case, when the received power level at the carrier frequency on the first communication channel 21 is higher than the threshold value, transmission of the communication data waits until the received power level falls to or below the threshold value, the transmission delay time lengthening as the wait continues.

In another scheme, the first communication unit 101 uses, as the first communication protocol, a communication protocol in which the first communication unit 101 transmits communication data after receiving a response from the receiving device 30, on which the decision to start transmitting is based. In this case the first communication unit 101 sends a signal to the third communication unit 301 in the receiving device 30, waits to receive an acknowledgment of the reception of this signal from the third communication unit 301, and then starts actual transmission of the communication data.

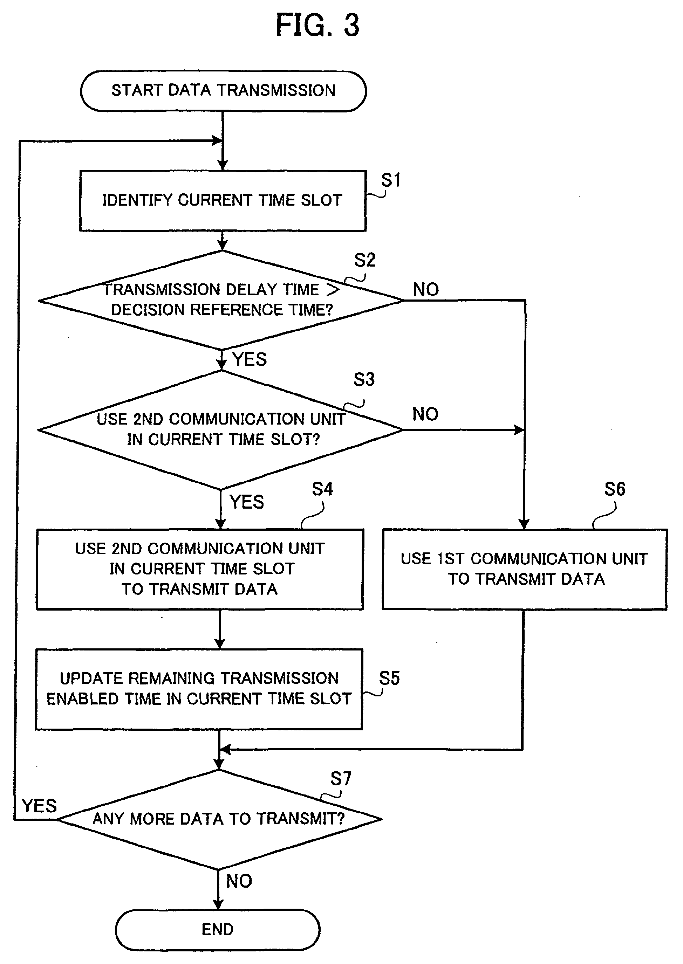

The main steps of the in-vehicle transmission method according to the first embodiment are shown in the flowchart in FIG. 3. The in-vehicle communication method shown in FIG. 3 is a communication method for an in-vehicle communication system in which a transmitting device 10 communicates with a receiving device 30 by using a first communication protocol and a differing second communication protocol, the second communication protocol having a rule that communication data can be transmitted only within a predetermined transmission time limit in a predetermined transmission restriction management period. The transmitting device 10 sets at least one time slot in the transmission restriction management period, preferably dividing it into a plurality of time slots, and assigns a transmission enabled time during which communication data can be transmitted by the second communication protocol in each time slot. When data are transmitted, the following process is executed.

As shown in FIG. 3, first the transmitting device 10 identifies the current time slot from current time information (step S1). Next, the transmitting device 10 decides whether or not the transmission delay time, which is the time taken to start transmitting communication data by the first communication protocol, exceeds a predetermined decision reference time (step S2).

If the decision in step S2 is Yes, the transmitting device 10 decides, on the basis of the transmission enable time assigned to the current time slot, whether or not to use the second communication unit 102 to transmit the communication data (step S3). This decision process will be described in further detail later.

If the decision in step S3 is Yes, the transmitting device 10 uses the second communication unit 102 to transmit the communication data by the second communication protocol in the current time slot (step S4), and updates the remaining transmission enabled time in the current time slot (step S5).

If the decision in step S2 or S3 is No, the transmitting device 10 uses the first communication unit 101 to transmit the communication data by the first communication protocol (step S6).

After step S5 or S6, the transmitting device 10 decides whether there is more pending communication data (step S7), returns to step S1 if there is, and terminates the communication data transmission process if there is not.

Next the decision reference time will be described. Some of the communication data transmitted from the transmitting device 10 include conditions such as time or time limit setting information or the like concerning the processing executed by the receiving device 30 that receives the communication data. When the communication data transmitted from the transmitting device 10 include image data, for example, the communication data may include setting information or the like concerning the time at which or by which an image based on the image data received by the receiving device 30 must be displayed. The communication data transmitted from the transmitting device 10 may also include information indicating the time at which the receiving device 30 is to execute a process, or a limit time by which the receiving device 30 must start executing the process. When the communication data transmitted from the transmitting device 10 include information giving the time of execution of a process, the difference between the current time and the time of execution of the process will be referred to as the processing request time; when the information included in the communication data transmitted from the transmitting device 10 indicate a limit time by which execution must start, the time until the limit time by which the execution must start will be referred to as the processing request time.

When information indicating the types of communication data in the in-vehicle communication system 1 and their execution times or execution starting limit times is determined in advance, on the basis of the type of communication data for which an instruction to transmit has been given, the decision reference time adjustment unit 109 sets the corresponding time as the processing request time.

As the decision reference time, the decision reference time adjustment unit 109 sets a value obtained by subtracting the time until the communication data are received by the fourth communication unit 302 from the second communication unit 102 through the second communication channel 22 and thereby acquired from the processing request time. For example, if communication data the processing of which must start within a maximum of 200 milliseconds are transmitted (so that the processing request time is 200 milliseconds), if the transmission time needed to transmit the communication data by the second communication protocol is 10 milliseconds, the decision reference time adjustment unit 109 sets the decision reference time to 190 milliseconds, obtained by subtracting 10 milliseconds from 200 milliseconds. If the transmission delay time using the first communication protocol exceeds the decision reference time of 190 milliseconds, the communication data are transmitted by the second communication protocol, so at the processing starting time 200 milliseconds after the time at which the transmission instruction is issued from the transmit data output unit 104, the transmission of the communication data will have been completed. The decision reference time adjustment unit 109 may add a one-millisecond margin to the above time of 10 milliseconds to make it 11 milliseconds, and set the decision reference time to 189 milliseconds (= 200 milliseconds - 11 milliseconds). When there is no information indicating a processing request time in the pending communication data, or when the type of communication data does not permit a processing request time to be set, the decision reference time adjustment unit 109 sets a decision reference time (a predetermined time, for example) that gives a sufficiently long time in which to transmit the communication data.

In response to the monitoring result (request) received from the communication status monitoring unit 105, the communication channel instruction unit 106 instructs the transmission control unit 103 to use either the first communication unit 101 or the second communication unit 102, or both, to transmit the communication data.

On the basis of the instruction from the communication channel instruction unit 106, the transmission control unit 103 performs control using the first communication unit 101 or second communication unit 102, or both, to transmit the communication data.

The transmission enabled time assignment unit 107 divides the predetermined transmission restriction management period into a plurality of time slots and assigns a transmission enabled time, during which use of the second communication unit 102 is permitted, per time slot (that is, in each of the time slots). The total value (total time) of the transmission enabled times assigned to the time slots is equal to or less than an upper limit value set within the transmission time limit.

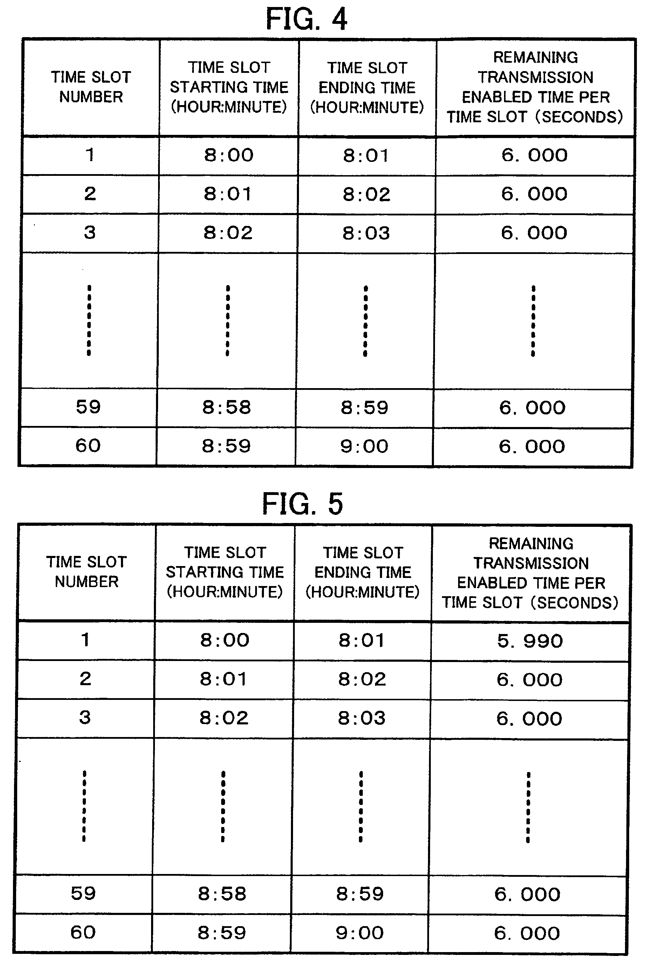

An example of the information about time slot assignments made by the transmission enabled time assignment unit in the transmitting device 10 in the first embodiment in a single transmission restriction management period is shown as a time slot assignment list in FIG. 4. In the example in FIG. 4, a one-hour transmission restriction management period is divided into 60 time slots, and a transmission enabled time of 6.000 seconds (6 s) is set in each one-minute time slot. The total of the transmission enabled times assigned to the time slots is therefore 360 seconds (6 s x 60). FIG. 4 represents the time slots when the current time is 8:00 (eight o'clock). Equal transmission enabled times of 6.000 seconds are assigned to all sixty time slots in FIG. 4, but there is no need for the transmission enabled times assigned to the sixty time slots to be mutually equal. Nor is it necessary for the total of the transmission enabled times to be equal to the transmission time limit; the total value need only be within the transmission time limit.

After one minute has passed, the exemplary information about time slot assignments made by the transmission enabled time assignment unit in the transmitting device 10 in the first embodiment in the transmission restriction management period under consideration appears as shown, for example, by the time slot assignment list in FIG. 5. From the initial time slot settings shown in FIG. 4, FIG. 5 shows an example of the information for the time slots (No. 1 to No. 60) in which the second communication unit 102 was used for 0.010 s (10 milliseconds) during the interval from 8:00 to 8:01. Since the second communication unit 102 was used during that time slot, the transmission enabled time management unit 108 has performed an update by subtracting the 0.010 s used by the second communication unit 102 from the remaining transmission enabled time of 6.000 s obtained by the transmission enabled time assignment unit 107 and making 5.990 the latest remaining transmission enabled time of that time slot. FIG. 5 accordingly shows 5.990 s as the remaining transmission enabled time set for the time slot (No. 1) corresponding to the current time.

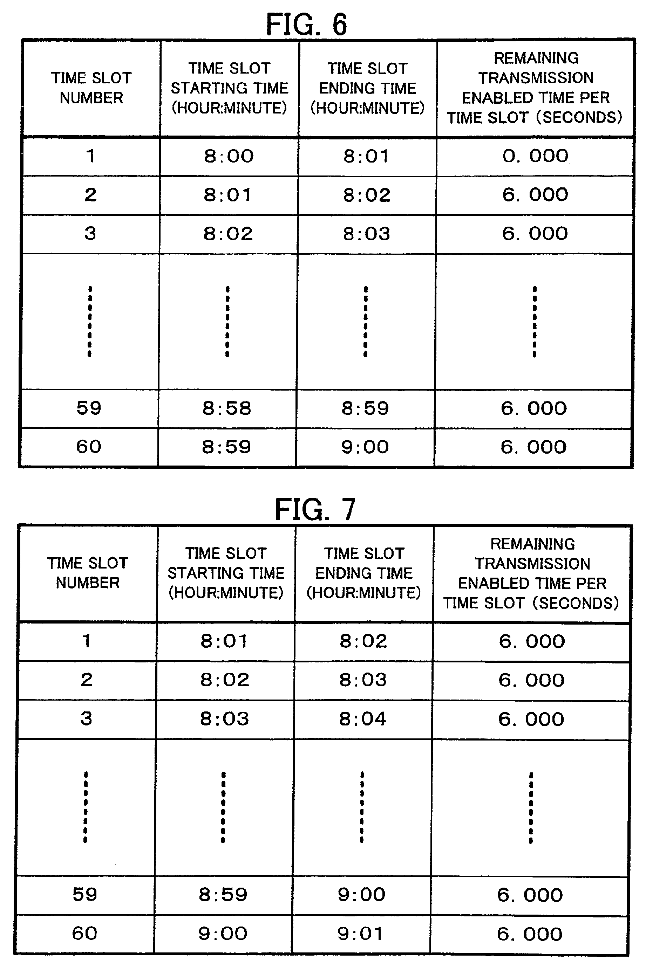

The time slot assignment list in FIG. 6 shows an example of the time slot information set for the transmission restriction management period under consideration by the transmission enabled time assignment unit 107 in the transmitting device 10 in the first embodiment after the elapse of one minute during which the transmission enabled time has been used up. In the example in FIG. 6, the second communication unit 102 was used for 6.000 s in the interval from 8:00 to 8:01. Since the second communication unit 102 has been used for 6.000 s in the interval from 8:00 to 8:01, the remaining transmission enabled time for that time slot (No. 1) is 0.000 s.

When use of the second communication unit 102 is requested from the communication status monitoring unit 105, the communication channel instruction unit 106 queries the transmission enabled time management unit 108 to find out whether the second communication unit 102 can be used. If there is transmission enabled time remaining in the current time slot, the transmission enabled time management unit 108 grants permission to use the second communication unit 102, and on the basis of this permission for use of the second communication unit 102, the communication channel instruction unit 106 instructs the transmission control unit 103 to carry out transmission with the second communication unit 102. If there is no transmission enabled time remaining in the current time slot, the transmission enabled time management unit 108 denies permission to use the second communication unit 102, and on the basis of this denial of permission for use of the second communication unit 102, the communication channel instruction unit 106 does not instruct the transmission control unit 103 to carry out transmission with the second communication unit 102. Here, the communication channel instruction unit 106 can manage the transmission enabled time more accurately by estimating the amount of communication data that the transmit data output unit 104 is asking to have transmitted and the time necessary for transmission if the second communication unit 102 is used, and deciding whether or not the remaining transmission enabled time in the current time slot is equal to or greater than the estimated transmission time.

The time slot assignment list in FIG. 7 shows an example of the time slot information assigned to one transmission restriction management period by the transmission enabled time assignment unit 107 in the transmitting device 10 in the first embodiment after the transmission enabled time has been exceeded. FIG. 7 shows an example of the time slot assignments made by the transmission enabled time assignment unit 107 when the current time is 8:01 or just before. To manage the transmission enabled time in the transmission restriction management period from 8:01 to 9:01, the transmission enabled time assignment unit 107 updates the time slot list at the elapse of one time slot interval or just before then.

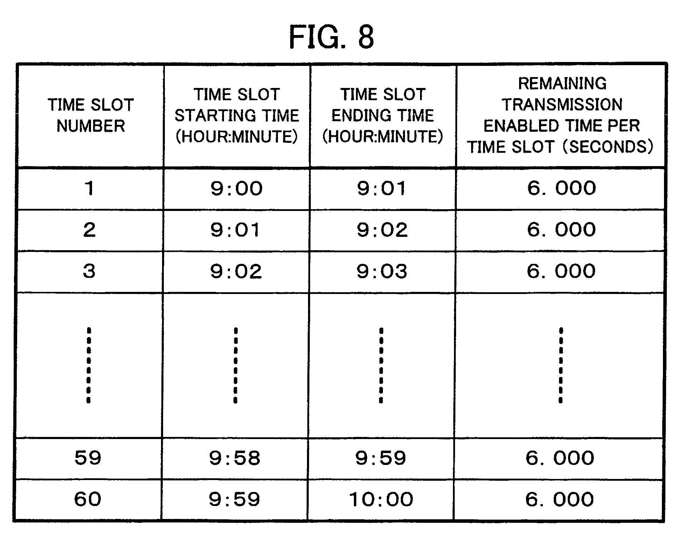

The time slot assignment list in FIG. 8 shows an example of the time slot information assigned to the next transmission restriction management period by the transmission enabled time assignment unit 107 in the transmitting device 10 in the first embodiment when the next transmission restriction management period follows the termination of the preceding transmission restriction management period. In the example in FIG. 8, the transmission enabled time assignment unit 107 does not update the time slots at or just before the expiration of the time slot interval, but instead resets the time slots at the end of each transmission restriction management period. Given the time slot settings in the transmission restriction management period from 8:00 to 9:00 shown in FIG. 4, until the current time reaches 9:00 or just before then, the transmission enabled time is managed without obtaining time slot assignments from the transmission enabled time assignment unit 107, and when the current time reaches 9:00 or just before then, time slot assignments for the transmission restriction management period from 9:00 to 10:00 are obtained from the transmission enabled time assignment unit 107, as shown in FIG. 8. The effect of this scheme is that it is only necessary to obtain time slot assignments from the transmission enabled time assignment unit 107 once per transmission restriction management period instead of once per time slot interval.

The decision reference time adjustment unit 109 obtains the decision reference time information from the communication status monitoring unit 105 and obtains the remaining transmission enabled time in the current time slot from the transmission enabled time management unit 108. When there is only a little remaining transmission enabled time in the current time slot, the decision reference time adjustment unit 109 instructs the communication status monitoring unit 105 to extend the decision reference time beyond its current setting. If the decision reference time set on the basis of the communication data for which a transmission instruction was received from the transmit data output unit 104 includes a margin from the time by which processing execution must start, the generation of a warning that the communication data cannot be transmitted within the processing execution deadline can be avoided by extending the decision reference time by shortening the margin. In addition, the second communication unit 102 can be used more effectively without using up the transmission time limit on the use of the second communication unit 102 early in the transmission restriction management period.

The decision reference time adjustment unit 109 may also request a readjustment by the transmission enabled time management unit 108 of the transmission enabled time in the current time slot (request that additional time be added to the transmission enabled time and the result be treated as a new transmission enabled time), in which case the transmission enabled time management unit 108 readjusts the transmission enabled times of the time slots so as to add additional time to the remaining transmission enabled time of the current time slot. This makes it possible to carry out the transmission in the current time slot and reduce the frequency of occurrence of warnings that the transmission cannot be completed within the time by which processing execution must start. In this case, if the transmission enabled time management unit 108 had set the total transmission enabled time assigned to the time slots to a value less than the predetermined transmission time limit, the need to readjust the transmission enabled time assigned to other time slots can be avoided by making the additional time equal to the excess time obtained by subtracting the total transmission enabled time assigned to the time slots from the transmission time limit.

Next, the operation when the in-vehicle communication system 1 is mounted in a train or other moving vehicle and communication data A1 are transmitted from the transmitting device 10 to the receiving device 30 will be described. The communication protocol used by the second communication unit 102 will be assumed to be a Specified Low-Power Radio protocol in which the transmission restriction management period is one hour and the transmission time limit is 360 seconds.

The transmission enabled time assignment unit 107 divides the transmission restriction management period into, for example, sixty time slots, and assigns six seconds of transmission enabled time to each of the sixty time slots. In the example shown in FIG. 8, to divide the one-hour transmission restriction management period from 8:00 to 9:00 into sixty time slots from No. 1 to No 60, the transmission enabled time assignment unit 107 gives the transmission enabled time management unit 108 time slot information including information setting the starting time and ending time of each of the sixty time slots, and information setting a transmission enabled time of six seconds in each of the sixty time slots.

The transmission enabled time management unit 108 obtains the time slot information assigned by the transmission enabled time assignment unit 107.

The transmit data output unit 104 sends the transmission control unit 103 an instruction to transmit communication data A1 to the receiving device 30.

The transmission control unit 103 commences preparations to have the first communication unit 101 transmit the communication data A1 to the receiving device 30. The communication status monitoring unit 105 starts measuring the transmission delay time from the time at which the transmit data output unit 104 gives the instruction to transmit communication data A1 to the receiving device 30, obtains the processing request time of communication data A1 and the amount of data, estimates the transmission time needed to transmit the amount of data in communication data A1 using the second communication protocol, and sets a decision reference time responsive to the processing request time and the amount of data such that transmission of the communication data will be completed within the processing request time even if the second communication protocol is used, enabling the processing starting time requirement in the receiving device 30 to be met.

The first communication unit 101 performs carrier sensing, and waits for the first communication channel 21 to become available.

If the communication status monitoring unit 105 receives information from the first communication unit 101 indicating that the first communication channel 21 has become available for communication before the elapse of the decision reference time from the start of measurement of the transmission delay time, it does not find that the transmission delay time for communication using the first communication unit 101 exceeds the decision reference time, and does not supply the communication channel instruction unit 106 with a request for transmission by use of the second communication unit 102. If the decision reference time passes without the reception of information from the first communication unit 101 indicating that the first communication channel 21 has become available for communication, however, the communication status monitoring unit 105 finds that the transmission delay time for communication using the first communication unit 101 exceeds the decision reference time and supplies the communication channel instruction unit 106 with a request for use of the second communication unit 102.

When the communication channel instruction unit 106 receives information requesting transmission using the second communication unit 102 from the communication status monitoring unit 105, it queries the transmission enabled time management unit 108 as to whether a transmission of the length of time that would be required to transmit the amount of communication data A1 by the second communication protocol can be permitted.

When the transmission enabled time management unit 108 receives information requesting transmission using the second communication unit 102 from the communication status monitoring unit 105, if the remaining amount of the transmission enabled time set for the current time slot is longer than the transmission time that would be required to transmit the amount of communication data A1 by the second communication protocol, it gives the communication channel instruction unit 106 permission for transmission by the second communication protocol.

When the communication channel instruction unit 106 receives permission from the transmission enabled time management unit 108 for transmission by the second communication protocol, it instructs the transmission control unit 103 to transmit communication data A1 by use of the second communication unit 102.

When instructed by the communication channel instruction unit 106 to transmit communication data A1 by use of the second communication unit 102, the transmission control unit 103 instructs the second communication unit 102 to execute the transmission of communication data A1.

When the first communication channel 21 becomes available for transmission and the transmission control unit 103 has not been instructed by the communication channel instruction unit 106 to transmit communication data A1 by use of the second communication unit 102, the transmission control unit 103 instructs the first communication unit 101 to execute the transmission of communication data A1.

The first communication unit 101 transmits the communication data A1 as instructed by the communication channel instruction unit 106. The second communication unit 102 manages the remaining time by deducting the transmission time used by the second communication unit 102 from the remaining transmission enabled time in the current time slot.

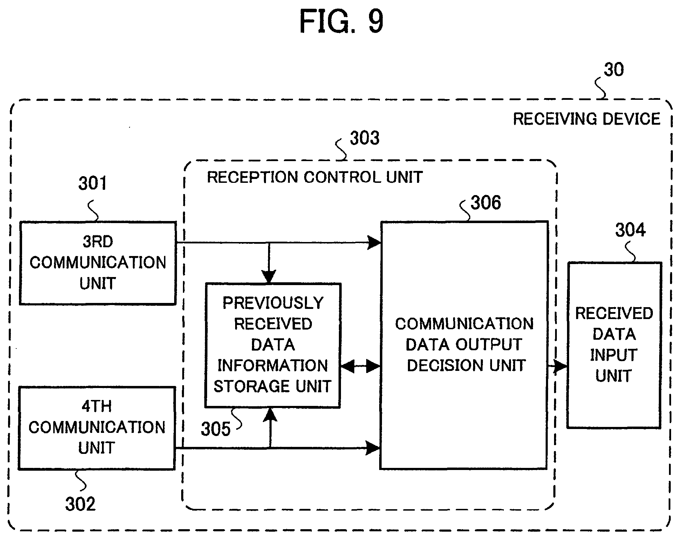

The block diagram in FIG. 9 shows the schematic configuration of the receiving device 30 in the first embodiment of the present invention. As shown in FIG. 9, the reception control unit 303 of the receiving device 30 includes a previously received data information storage unit 305 and a communication data output decision unit 306. The previously received data information storage unit 305 stores identification information identifying communication data received by the third and fourth communication units 301, 302. The communication data output decision unit 306 checks the identification information of communication data received by the third and fourth communication units 301, 302 to determine whether communication data having the same identification information has already been received and registered in the previously received data information storage unit 305. When communication data having the same identification information is determined to have already been received, the communication data output decision unit 306 does not supply the communication data to the received data input unit 304. When communication data having the same identification information is determined not to have been received already, the communication data output decision unit 306 supplies the communication data to the received data input unit 304.

The identification information stored in the previously received data information storage unit 305 when communication data are received by the third and fourth communication units 301, 302 is not limited to any particular information, provided the information enables the sameness of communication data to be recognized. Sequence numbers may be used, for example. A four-byte sequence number is provided in the header used in the transmission control protocol (TCP); these sequence numbers may be stored as identification information. Sequence numbers, however, are generally incremented by one per data transmission, and loop by being reset to zero when they reach the maximum value that can be expressed within the data length of the sequence numbers themselves. The previously received data information storage unit 305 must therefore delete old identification information before a loop occurs and the same sequence number is used again. The previously received data information storage unit 305 may be configured as, for example a first-in-first-out (FIFO) memory with a depth equal to or less than the maximum value of the sequence numbers. Alternatively, the identification information stored in the previously received data information storage unit 305 may simply be deleted at fixed time intervals shorter than the loop period of the sequence numbers.

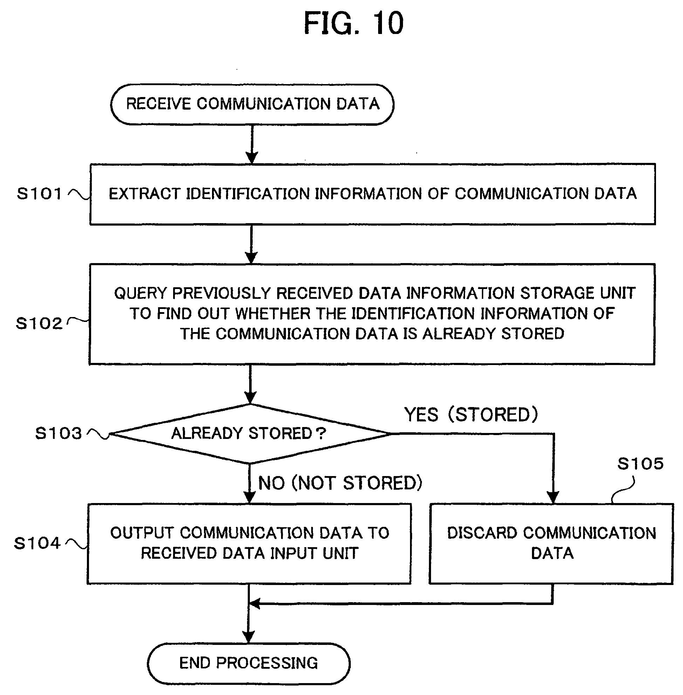

The flowchart in FIG. 10 illustrates the process by which the communication data output decision unit 306 in the receiving device 30 in FIG. 9 decides whether to supply communication data received by the third and fourth communication units 301, 302 to the received data input unit 304. This process starts with the reception of communication data by the third communication unit 301 or fourth communication unit 302. Next the communication data output decision unit 306 extracts identification information from the received communication data (step S101), queries the previously received data information storage unit 305 to find out whether the extracted identification information is already stored in the previously received data information storage unit 305 (step S102), and decides, from the reply, whether or not the identification information is already stored (step S103). If the result of the decision in step S103) is that the identification information is not already stored, implying that communication data identical to the communication data from which the identification information was extracted have not already been received, the communication data output decision unit 306 outputs the received communication data to the received data input unit 304 (step S104). If the result of the decision in step S103 is that the identification information is already stored and communication data identical to the communication data from which the identification information was extracted have already been received, the communication data output decision unit 306 discards the received communication data (step S105).

In the transmitting device 10, receiving device 30, in-vehicle communication system 1, and in-vehicle communication method according to the first embodiment described above, when the transmission delay time in the first communication unit 101 is not found to exceed a predetermined decision reference time, the first communication unit 101 transmits the pending communication data. Even when the transmission delay time in the first communication unit 101 is found to exceed a predetermined decision reference time, if the total transmission time for transmission of the communication data by the second communication unit 102 exceeds an upper limit value determined for the total time used by the second communication unit 102 for data transmission in a predetermined transmission restriction management period, the first communication unit 101 transmits the pending communication data. However, when the transmission delay time in the first communication unit 101 is found to exceed a predetermined decision reference time and the total transmission time for transmission of the communication data by the second communication unit 102 does not exceed the upper limit value determined for the total time used by the second communication unit 102 for data transmission in a predetermined transmission restriction management period, the second communication unit 102 transmits the pending communication data. The transmitting device 10, receiving device 30, in-vehicle communication system 1, and in-vehicle communication method according to the first embodiment can therefore make effective use of the second communication channel, on which communication is permitted only within a predetermined transmission time limit in each predetermined transmission restriction management period.

In the transmitting device 10, receiving device 30, in-vehicle communication system 1, and in-vehicle communication method according to the first embodiment, the decision as to whether or not the total transmission time for transmission of communication data by the second communication unit 102 exceeds the upper limit value set for the total time used by the second communication unit 102 for data transmission in the predetermined transmission restriction management period can be carried out for each time slot. Accordingly, a transmission enabled time during which use of the second communication unit 102 is permitted can be assigned to each time slot, and when use of the second communication unit 102 is requested, whether or not to use the second communication unit 102 can be decided from the remaining transmission enabled time in the current time slot. The transmission enabled time during which use of the second communication unit 102 is permitted can also be managed on a time-slot basis. The transmitting device 10, receiving device 30, in-vehicle communication system 1, and in-vehicle communication method according to the first embodiment can accordingly make effective use of the second communication protocol even when several of the communication channels used by the in-vehicle communication system permit transmission only for a predetermined time in each predetermined period.

Second Embodiment

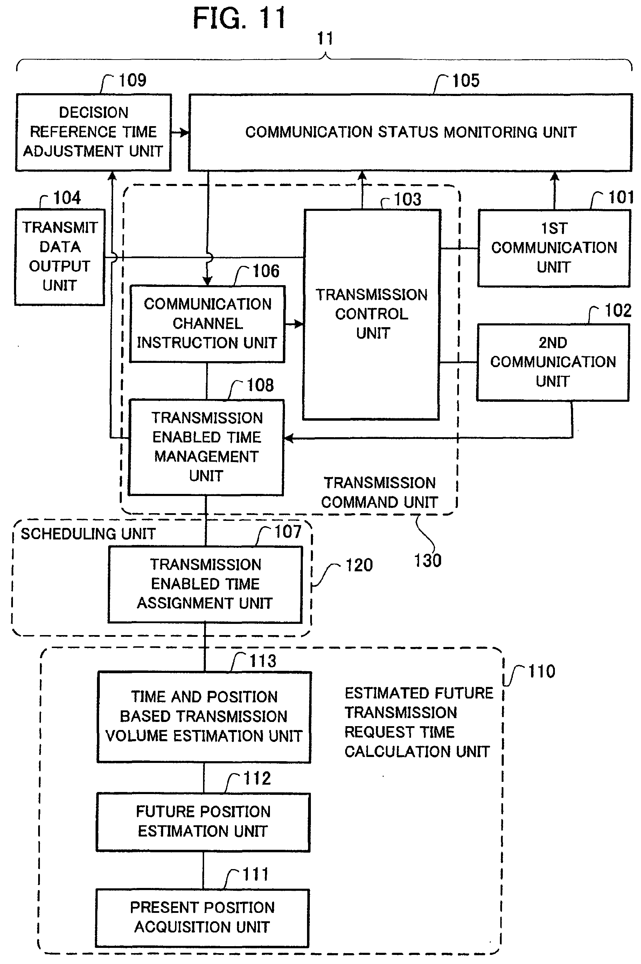

The block diagram in FIG. 11 shows the schematic configuration of the transmitting device 11 in a second embodiment of the invention. Elements which are the same as in FIG. 2 are designated by the same reference characters. As shown in FIG. 11, the transmitting device 11 differs from the transmitting device 10 in FIG. 2 (in the first embodiment) by having an estimated future transmission request time calculation unit 110, the values calculated by which are used by the transmission enabled time assignment unit 107 in assigning transmission enabled times. In other respects, the transmitting device 11 shown in FIG. 11 has the same configuration as the transmitting device 10 shown (in the first embodiment) in FIG. 2. The transmitting device 11 shown in FIG. 11 can be used in place of the transmitting device 10 used (in the first embodiment) in the in-vehicle communication system 1 shown in FIG. 1. In that case the transmitting device 11 and the receiving device 30 constitute an in-vehicle communication system according to the second embodiment.

As shown in FIG. 11, the estimated future transmission request time calculation unit 110 includes a present position acquisition unit 111, a future position estimation unit 112, and a time and position based transmission volume estimation unit 113. The present position acquisition unit 111 is shown in FIG. 11 as part of the transmitting device 11, but the present position acquisition unit 111 may be located in a separate device (such as a train operation management system, for example), not included in the transmitting device 11, provided it can communicate with the transmitting device 11. In that case, the transmitting device 11, the receiving device 30, and the present position acquisition unit 111 constitute the in-vehicle communication system.

The present position acquisition unit 111 obtains the present position of the transmitting device 11 (the position at which the transmitting device 11 is currently located). The present position acquisition unit 111 may obtain this present position from, for example, the Global Positioning System (GPS). The present position acquisition unit 111 may, however, obtain the present position by means other than GPS. When the in-vehicle communication system 1 equipped with the transmitting device 11 is mounted in a moving vehicle such as a train or bus, for example, the present position acquisition unit 111 may treat present position information obtained by a system in the train, bus, or other moving vehicle as the present position of the transmitting device 11. When the moving vehicle is a train, in many cases the present position information is held or obtained by an on-board system that manages the train's movements, and the present position acquisition unit 111 may obtain the present position information from that system.

The future position estimation unit 112 estimates the position of the transmitting device 11 at a future time (a time after the current time). This position will also be referred to as an estimated future position. There is no particular restriction concerning the method used by the future position estimation unit 112 to estimate the position of the transmitting device 11 at a future time. The future position estimation unit 112 may, for example, store information indicating various (future) times and positions of the transmitting device 11 at those times as an estimated future position reference table, and estimate the position of the transmitting device 11 at a future time by referring to this estimated future position reference table. The memory in which the estimated future position reference table is stored may be internal to the future position estimation unit 112, or it may be an external memory to which the future position estimation unit 112 is communicably connected.

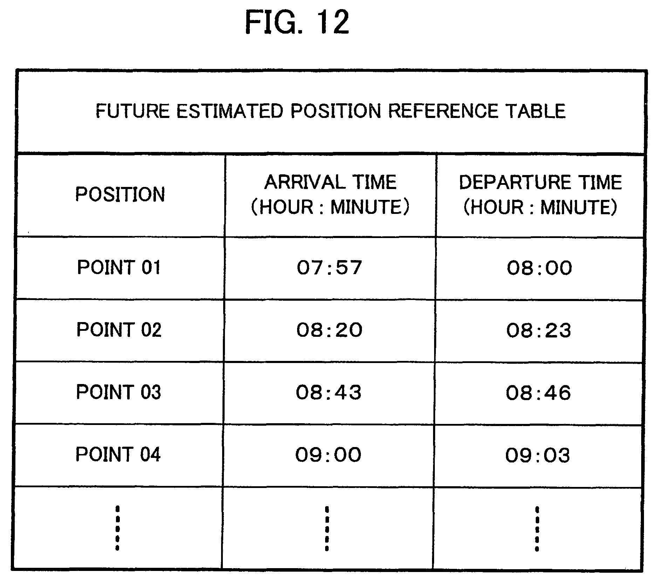

An exemplary future estimated position reference table of the type possessed by the future position estimation unit 112 in the transmitting device 11 in the second embodiment is shown in FIG. 12. As shown in FIG. 12, the estimated future position reference table indicates times at which the moving vehicle in which the in-vehicle communication system 1 is mounted will arrive at and depart from various points (for example, points 01, 02, ...). When the moving vehicle in which the in-vehicle communication system 1 is mounted is a train, the estimated future position reference table is similar to the train's timetable. Since the future position estimation unit 112 has access to information such as this estimated future position reference table, by referring to the information in the estimated future position reference table it can determine whether, at a future time, the transmitting device 11 will be positioned at one of the positions (points) listed in the estimated future position reference table or in an interval between two of those positions (an interval between two points).

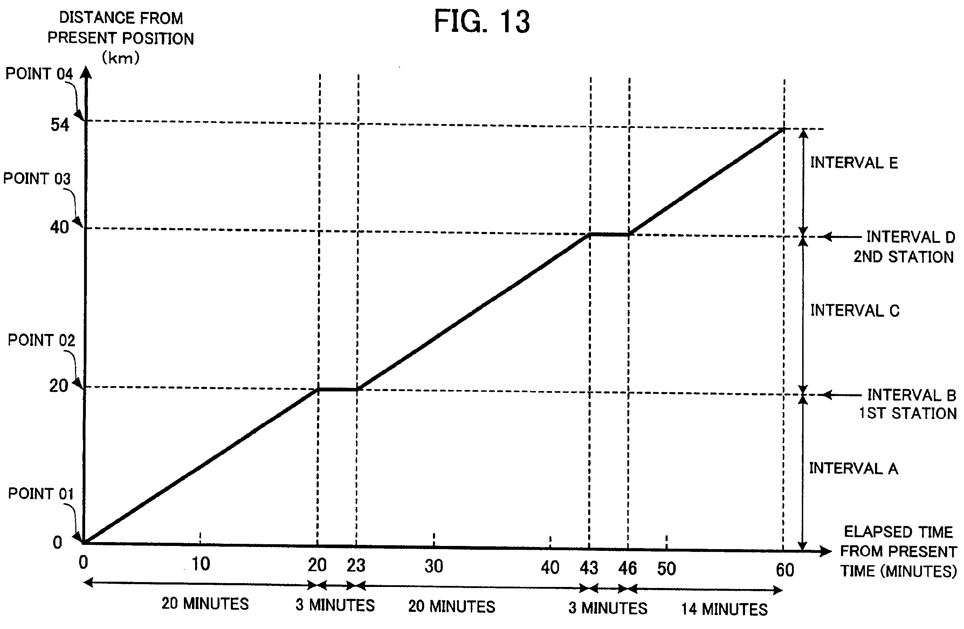

The future position estimation unit 112 may alternatively possess an estimated future position reference table of the type that enables the position of the transmitting device 11 at a future time to be estimated from the present position of the transmitting device 11 and the current time. In that case, by referring to the estimated future position reference table, the future position estimation unit 112 estimates the position of the transmitting device 11 at a future time on the basis of the current time and the present position of the transmitting device 11, which it obtains from the present position acquisition unit 111. The method of estimation in this case will be described below with reference to FIG. 13.

FIG. 13 illustrates an exemplary relationship between the position of the transmitting device and elapsed time from the present time, based on the future estimated position reference table possessed by the future position estimation unit 112 in the transmitting device 11 in the second embodiment. The present time in FIG. 13 is the time of departure from point 01 (which is the present position) according to FIG. 12. The interval of time spent between point 01 and point 02 will be referred to as interval A; the interval of time spent at point 02 will be referred to as interval B; the interval of time spent between point 02 and point 03 will be referred to as interval C; the interval of time spent at point 03 will be referred to as interval D; the interval of time spent between point 03 and point 04 will be referred to as interval E.

In the example in FIG. 13, the vehicle in which the transmitting device 11 is mounted moves at 60 kilometers per hour (kph) from the present position (point 01) for twenty minutes to arrive at the point 20 km from its current position (point 02), stops there (at point 02) for three minutes (from the time 20 minutes after the current time to the time 23 minutes after the current time), moves at 60 kph from the point 20 km from its current position (point 02) for twenty minutes to arrive at the point 40 km from its current position (point 03), stops there (at point 03) for three minutes (from the time 43 minutes after the current time to the time 46 minutes after the current time), and then moves at 60 kph from the point 40 km from its current position (point 03) for fourteen minutes to arrive at the point 54 km from its current position (point 04).

Although positional information is normally two- or three-dimensional, when the transmitting device 11 is mounted on a train, its position can also be expressed as one-dimensional information. A two-dimensional or three-dimensional expression may, however, be used instead.

Given the type of information shown in FIG. 11, the position of the transmitting device 11 at a future time can be estimated from its present position and the current time.

From the future position information obtained from the future position estimation unit 112, the time and position based transmission volume estimation unit 113 estimates the total time for which the second communication unit 102 will be used to transmit all of the communication data transmitted from the transmitting device 11 to the receiving device 30 that it estimates the second communication unit 102 will be asked to transmit during the interval of one hour from the current time. This total time is the estimated future transmission request time.

There is no particular restriction on the method of estimating the estimated future transmission request time. The time and position based transmission volume estimation unit 113 may, for example, possess a previously prepared estimated future transmission request time reference table indicating estimated future transmission request times at the various points or in the various intervals on the planned route of the moving vehicle in which the transmitting device 11 is mounted, and refer to the estimated future transmission request time reference table to estimate the estimated future transmission request time at a given point or in the interval between two points.

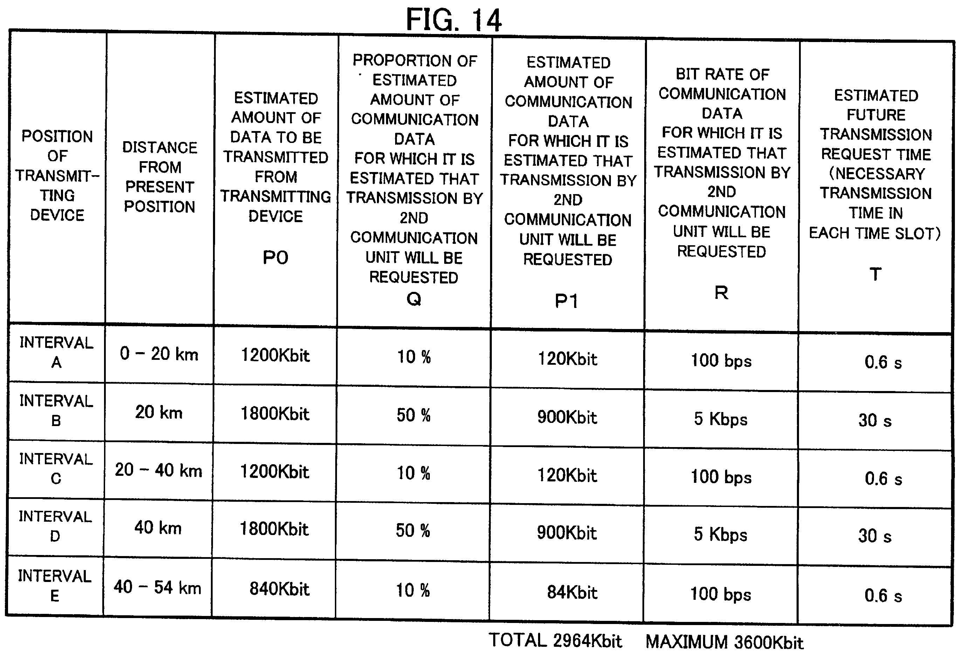

An exemplary estimated future transmission request time reference table possessed by the time and position based transmission volume estimation unit 113 in the transmitting device 11 in the second embodiment is shown in FIG. 14. The estimated future transmission request time reference table in FIG. 14 is based on the relation between position and elapsed time from the current time shown in FIG. 13. The memory in which the estimated future transmission request time reference table is stored may be internal to the time and position based transmission volume estimation unit 113, or it may be an external memory to which the time and position based transmission volume estimation unit 113 is communicably connected. The estimated future transmission request time reference table in FIG. 14 indicates the position of the transmitting device 11 (a point in interval B or D or an interval between two points in intervals A, C, and E), its distance in kilometers (km) from the present position, the estimated amount (PO) in kilobits (Kbit) of data that will be transmitted from the transmitting device 10 to the receiving device 30 there, the proportion Q in percent (%) of the estimated amount PO of data transmitted from the transmitting device 10 to the receiving device 30 for which it is estimated that transmission by the second communication unit 102 will be requested, the estimated amount P1 of communication data for which it is estimated that transmission by the second communication unit 102 will be requested in the estimated amount PO of data transmitted from the transmitting device 10 to the receiving device 30, the bit rate R in bits per second (bps) of the communication data for which it is estimated that transmission by the second communication unit 102 will be requested in the estimated amount PO of data transmitted from the transmitting device 10 to the receiving device 30, and the estimated future transmission request time T (the necessary transmission time in each time slot) in seconds (s).

FIG. 14 shows an example for a time period such as the time period around eight o'clock in the morning when the number of passengers in the moving vehicle in which the in-vehicle communication system 1 is mounted is comparatively large. For simplicity, one kilobit (1024 bits) is calculated as one thousand bits in the second embodiment. In FIG. 14, the estimated amount PO of data to be transmitted from the transmitting device 11 in interval A is 1200 kilobits. The estimated proportion Q of the data for which transmission by the second communication unit 102 will be requested here is 10%. The estimated amount P1 of data for which it is estimated that transmission by the second communication unit 102 will be requested in interval A is accordingly 10% of the estimated 1200-kilobit amount PO of data to be transmitted from the transmitting device 11 in interval A, or 120 kilobits. It is estimated that the remaining 90% (1080 kilobits) of the pending communication data from the transmitting device 11 in interval A can be transmitted by the first communication unit 101 alone without having the transmission delay time of the first communication unit 101 exceed the decision reference time. Since the duration of interval A is twenty minutes (1200 seconds), the average bit rate of the communication data transmitted by the second communication unit 102 in interval A is:

$$\texttt{(120 kilobits) / (1200 seconds) = 100 bps}$$

If the second communication unit 102 is capable of transmitting at an average rate of ten kilobits per second (10 kbps), then the proportion of the time during which it must transmit (its bandwidth occupation) is

$$\texttt{(100 bps) / (10 kbps) = 1\%}$$

This means that if the time slots are one minute (60 seconds) long, it should suffice to assign 0.6 seconds (1%) of transmission enabled time per time slot.

Similarly, the estimated amount PO of data to be transmitted from the transmitting device 11 in interval B is 1800 kilobits. The estimated proportion Q of the data for which transmission by the second communication unit 102 will be requested is set here to, for example, 50%. The estimated amount P1 of data for which it is estimated that transmission by the second communication unit 102 will be requested in interval B is accordingly 50% of the estimated 1800-kilobit amount PO of data to be transmitted from the transmitting device 11 in interval B, or 900 kilobits. It is estimated that the remaining 50% (900 kilobits) of the pending communication data from the transmitting device 11 in interval B can be transmitted by the first communication unit 101 alone without having the transmission delay time of the first communication unit 101 exceed the decision reference time. The general reason why the proportion Q of the data for which it is estimated that transmission by the second communication unit 102 will be requested is higher in interval B than in interval A is that the transmission environment (for example, the amount of wireless interference and the degree of congestion) varies from interval to interval, making it necessary to adjust the proportion Q according to the interval. A more specific reason is as follows. The vehicle in which the in-vehicle communication system is mounted is moving during interval A, but is stopped at the first station during interval B; at a station there are many wireless transmission devices besides the transmitting device 11 and receiving device 30; it is anticipated that the interference and congestion caused by the wireless signals transmitted by these other wireless transmission devices will be intense, causing the transmission delay time observed by the communication status monitoring unit 105 to lengthen; it is therefore estimated that the amount of data for which transmission by the second communication unit 102 will be requested will increase.

Since the duration of interval B is three minutes (180 seconds), the average bit rate of the communication data transmitted by the second communication unit 102 in interval B is:

$$\text{(900 kilobits) / (180 seconds) = 5 kbps}$$

If the second communication unit 102 has the capability to transmit at an average rate of 10 kbps, then its bandwidth occupation is

$$\text{(5 kbps) / (10 kbps) = 50\%}$$

This means that if the time slots are one minute (60 seconds) long, it should suffice to assign 30 seconds (50%) of transmission enabled time per time slot.

In intervals C and E, as in interval A, the train is moving; in interval D, as in interval B, the train is stopped at a station (the second station). The transmission enabled time assigned to each time slot in intervals C and E is the same as in interval A; the transmission enabled time assigned to each time slot in interval D is the same as in interval B.

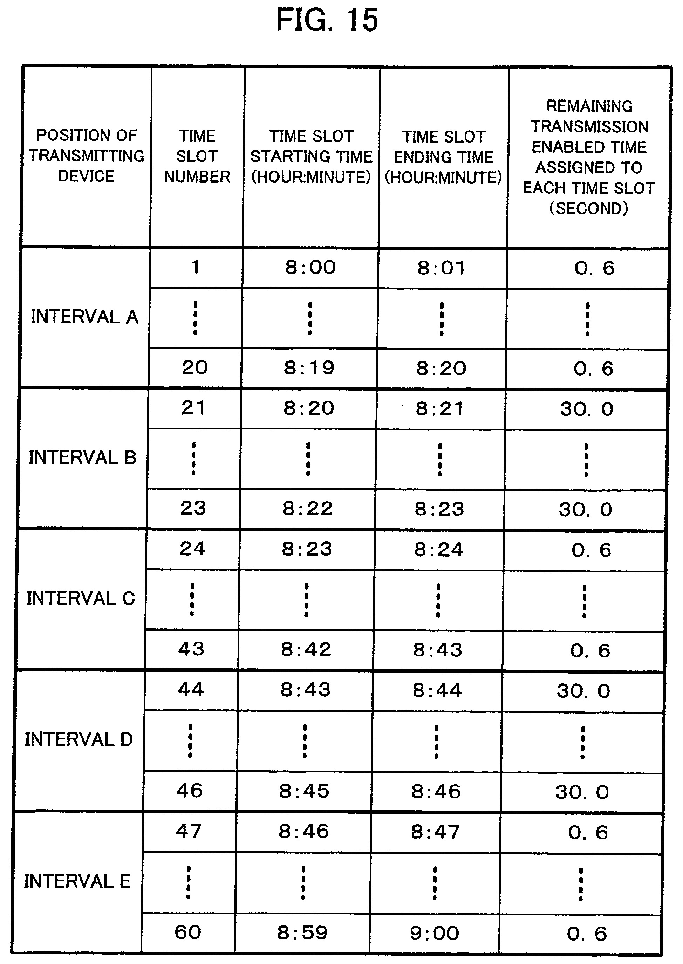

An exemplary assignment of transmission enabled time to the sixty time slots in the hour from eight o'clock to nine o'clock in accordance with FIG. 13 is shown in FIG. 15. A transmission enabled time of 0.6 seconds is assigned to the time slot with time slot number 1, which starts at 8:00 and during which the transmitting device 11 is in interval A; a transmission enabled time of 30 seconds is assigned to the time slot with time slot number 21, which starts at 8:20 and during which the transmitting device 11 is in interval B.

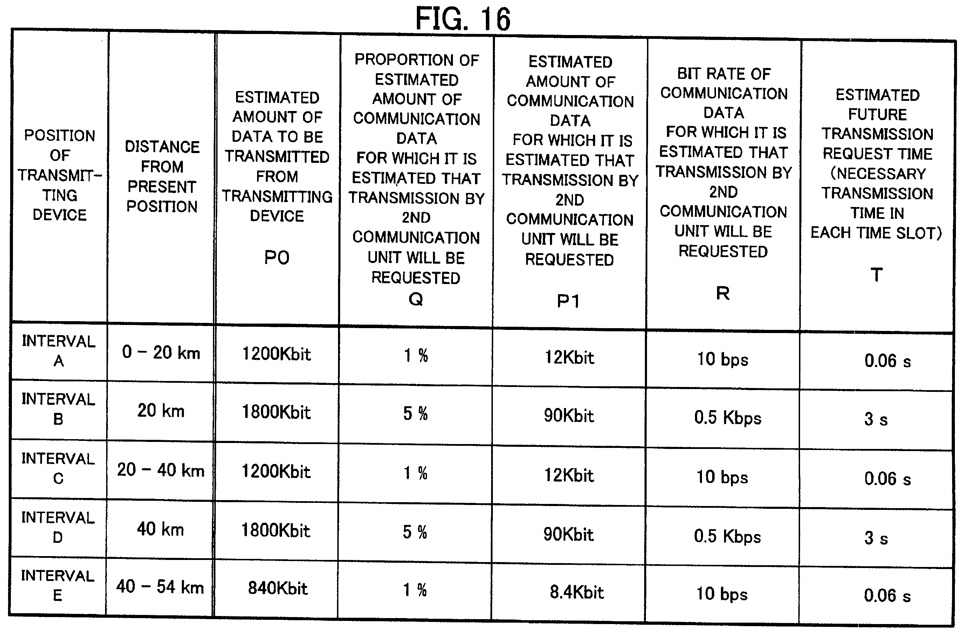

Another exemplary estimated future transmission request time reference table that may be possessed by the time and position based transmission volume estimation unit 113 in the transmitting device 11 in the second embodiment is shown in FIG. 16. FIG. 16 shows an example for a time period such as the time period around eleven o'clock in the morning when the number of passengers is comparatively small. The five intervals from interval A to interval E are the same in FIG. 16 as in FIG. 14. The estimated amount PO of communication data transmitted from the transmitting device 11 in interval A is 1200 kilobits, the same as around eight o'clock in FIG. 14, but the estimated amount P1 of the communication data for which it is estimated that transmission by the second communication unit 102 will be requested is only 12 kilobits (1%), which is only one-tenth the amount around eight o'clock. This is because around eleven o'clock there are fewer passengers in the car in which the transmitting device 11 is mounted than around eight o'clock, so it is anticipated that there will be fewer wireless transmitting devices other than the transmitting device 11 and the receiving device 30. There will therefore be less interference and congestion caused by wireless signals transmitted by such other wireless transmitting devices, and it can be anticipated that the transmission delay times observed by the communication status monitoring unit 105 will be shorter.

Since the length of interval A is 20 minutes (1200 seconds) in FIG. 16, the average bit rate is:

$$\text{(12 kilobits) / (1200 seconds) = 10 bps}$$

If the average transmission rate of which the second communication unit 102 is capable is 10 kbps, its bandwidth occupation is:

$$(10\ bps)\ /\ (10\ kbps)\ =\ 0.1\%$$

If the time slots are one minute (60 seconds) long, it should suffice to assign 0.06 seconds (0.1%) of transmission enabled time per time slot.

Similarly, the estimated amount PO of communication data transmitted from the transmitting device 11 in interval B is 1800 kilobits, and the estimated proportion Q of the data for which transmission by the second communication unit 102 will be requested is assumed to be 5%. The estimated amount P1 of data for which it is estimated that transmission by the second communication unit 102 will be requested in interval B is accordingly 5% of the total estimated 1800-kilobit amount PO, or 90 kilobits.

Since interval B is three minutes (180 seconds) long, the average bit rate is:

$$(90\ kilobits)\ /\ (180\ seconds)\ =\ 0.5\ kbps$$

If the second communication unit 102 has the capability to transmit at an average rate of 10 kbps, then its bandwidth occupation is

$$(0.5\ kbps)\ /\ (10\ kbps)\ =\ 5\%$$

This means that if the time slots are one minute (60 seconds) long, it should suffice to assign 3 seconds (5%) of transmission enabled time in each one-minute (60-second) time slot.

In intervals C and E in FIG. 16, as in interval A, the train is moving; in interval D, as in interval B, the train is stopped at a station (the second station). The transmission enabled time assigned to each time slot in intervals C and E is the same as in interval A; the transmission enabled time assigned to each time slot in interval D is the same as in interval B.

In the second embodiment, future transmission requests are estimated for different periods of time as in FIG. 14 (a crowded period) and FIG. 16 (a sparse period) and time slot assignments are made accordingly, enabling the second communication protocol to be used effectively, so the frequency of occurrence of warnings (alarm tones, warning displays, etc.) that the transmission of communication data from the transmitting device 11 cannot be completed within the time by which the receiving device 30 has to execute its processing can be reduced.

When information about the actual passenger load of the vehicle (the number of passengers) can be obtained, future transmission requests can be estimated on the basis of that information and more appropriate time slot assignments can be made. For example, a control scheme similar to the scheme for crowded times shown in FIG. 14 can be used when there are many passengers, and a control scheme similar to the scheme for sparse times shown in FIG. 16 can be used when there are few passengers, enabling the second communication protocol to be used appropriately and effectively.

Those skilled in the art will recognize that further variations are possible within the scope of the invention.

**Claims**

**1.** A transmitting device (10, 11) comprising:

a first communication unit (101) for transmitting communication data by a first communication protocol;
a second communication unit (102) for transmitting communication data by a second communication protocol differing from the first communication protocol, the second communication protocol having a rule that in a predetermined transmission restriction management period, communication data can only be transmitted within a predetermined transmission time limit;
a scheduling unit (120) for determining an upper limit value for a time during which the second communication unit (102) is permitted to transmit communication data in the transmission restriction management period such that a total transmission time expended in the transmission of communication data using the second communication unit (102) in the transmission restriction management period does not exceed the transmission time limit;

a communication status monitoring unit (105) for monitoring whether or not a transmission delay time exceeds a predetermined decision reference time, the transmission delay time being a time taken for transmission of communication data by the first communication unit (101) to begin; and

a transmission command unit (130) for instructing the second communication unit (102) to transmit pending communication data when the communication status monitoring unit (105) finds that the transmission delay time exceeds the decision reference time and the total time taken by the second communication unit (102) to transmit the communication data does not exceed the determined upper limit value.

2. The transmitting device (10, 11) of claim 1, wherein the scheduling unit (120) has a transmission enabled time assignment unit (107) that divides the transmission restriction management period into a plurality of time slots and assigns, in each of the plurality of time slots, a transmission enabled time in which use of the second communication unit (102) is permitted, and the transmission command unit (130) further comprises:

a transmission enabled time management unit (108) for storing the transmission enabled times assigned by the transmission enabled time assignment unit (107), deciding, when the communication status monitoring unit (105) finds that the transmission delay time exceeds the decision reference time, on a basis of the transmission enabled time assigned to a current time slot, whether or not to use the second communication unit (102), and when the communication data have been transmitted using the second communication unit, storing a value obtained by subtracting the time used by the second communication unit to transmit the communication data from the transmission enabled time assigned to the current time slot as a remaining transmission enabled time; and

a transmission control unit (103) for instructing the second communication unit (102) to transmit the pending communication data when the transmission enabled time management unit (108) decides to use the second communication unit.

3. The transmitting device (10, 11) of claim 1 or 2, wherein the transmission delay time is a time from when an instruction to transmit the communication data is sent to the first communication unit (101) until the first communication unit has performed carrier sensing, has determined that transmission is possible, and begins to transmit the communication data, or a time from when the instruction to transmit the communication data is sent to the first communication unit until the first communication unit receives a response from a receiving device (30).

4. The transmitting device (10, 11) of any one of claims 1 to 3, wherein when the communication status monitoring unit (105) finds that transmission delay time has exceeded a predetermined decision reference time, the transmission enabled time management unit (108) decides to use the second communication unit (102) if it decides that the second communication unit can finish transmitting the communication data in a remaining time obtained by subtracting the time already expended in transmission using the second communication unit during the current time slot from the transmission enabled time assigned to the current time slot, and decides not to use the second communication unit if it decides that the second communication unit cannot finish transmitting the communication data in the remaining, time.

5. The transmitting device (11) of claim 2, further comprising an estimated future transmission request time calculation unit (110) for predicting estimated times of future transmission requests indicating requests to use the second communication unit (102) for transmission of communication data at one of a plurality of points at which the transmitting device will arrive after the current time or in an interval between a pair of the points, wherein:

the transmission enabled time assignment unit (107) assigns the transmission enabled times to the plurality of time slots on a basis of results of predictions made by the estimated future transmission request time calculation unit (110).

6. The transmitting device (11) of claim 5, wherein the estimated future transmission request time calculation unit (110) predicts the estimated times of future transmission requests requesting use of the second communication unit (102) on a basis of a communication environment at the one of the plurality of points at which the transmitting device will arrive after the current time or in the interval between the pair of the points.

7. The transmitting device (11) of claim 6, wherein the estimated future transmission request time calculation unit (110) predicts the estimated times of future transmission requests requesting use of the second communication unit (102) on a basis of a range of time in which the transmitting device will arrive at the communication environment.

8. The transmitting device (10) of any one of claims 2 and 5 to 7, wherein when the remaining time obtained by subtracting the time already expended in transmission using the second communication unit (102) during the current time slot from the transmission enabled time assigned to the current time slot is shorter than a predetermined reference time, the transmission enabled time assignment unit (107) readjusts the transmission enabled times, thereby adding additional time to the transmission enabled time in the current time slot, in such a way that a total sum of the new transmission enabled times assigned to the time slots fits within the transmission time limit.

9. The transmitting device (10) of any one of claims 2 and 5 to 7, wherein the transmission enabled time assignment unit (107):

assigns the transmission enabled times such that a total sum of the transmission enabled times assigned within each time slot duration is less than the transmission time limit; and
stores an excess time obtained by subtracting the total sum of the transmission enabled times from the transmission time limit; and
the additional time added by the transmission enabled time assignment unit (107) to the transmission enabled time in the time slot duration when the remaining time obtained by subtracting the time already expended in transmission using the second communication unit (102) during the current time slot from the transmission enabled time assigned to the current time slot is shorter than the predetermined reference time is within the excess time.

10. An in-vehicle communication system (1), comprising:

the transmitting device (11) of any one of claims 1 to 9;
a receiving device (30) having a third communication unit (301) for receiving first communication data transmitted from the first communication unit (101) of the transmitting device (10) of claim 1, a fourth communication unit (302) for receiving second communication data transmitted from the second communication unit (102) of the transmitting device (10) of claim 1, and a reception control unit (303) for, when communication data with identical content are received by the third communication unit (301) and the fourth communication unit (302), outputting either the communication data received by the third communication unit or the communication data received by the fourth communication unit; and
a present position acquisition unit (111) for acquiring current position information and supplying the current position information to the transmitting device.

11. The in-vehicle communication system (1) of claim 10, wherein the reception control unit (303) of the receiving device (30) determines whether or not the first communication data received by the third communication unit (301) are identical to communication data received previously, determines whether or not the second communication data received by the fourth communication unit (302) are identical to communication data received previously, and when either the first communication data received by the third communication unit or the second communication data received by the fourth communication units are not identical to communication data received previously, outputs the communication data received by the third communication unit or the fourth communication unit.

12. An in-vehicle communication method used by an in-vehicle communication system (1) in which communication between a transmitting device (10, 11) and a receiving device (30) is carried out by a first communication protocol and a second communication protocol, the second communication protocol having a rule that in a predetermined transmission restriction management period, communication data can only be transmitted within a predetermined transmission time limit, wherein:

a transmitting process in the transmitting device (10, 11) comprises
transmitting the communication data by the first communication protocol,
determining an upper limit value for a time during which transmission of the communication data by the second communication protocol is permitted in the transmission restriction management period such that a total transmission time expended in the transmission of communication data by the second communication protocol in the transmission restriction management period does not exceed the transmission time limit,
monitoring whether or not a transmission delay time exceeds a predetermined decision reference time, the transmission delay time being a time taken for transmission of communication data by the first communication protocol to begin, and
transmitting the communication data by the second communication protocol when the transmission delay time is found to exceed the decision reference time and the total time taken to transmit the communication data by the second communication protocol does not exceed the determined upper limit value; and
a receiving process in the receiving device (30) comprises
when communication data with identical content are received by the first communication protocol and the second communication protocol, outputting either the communication data received by the first communication protocol or the communication data received by the second communication protocol.

13. The in-vehicle communication method of claim 12 wherein the transmitting process in the transmitting device (10, 11) further comprises
dividing the transmission restriction management period into a plurality of time slots and assigning, in each of the plurality of time slots, a transmission enabled time in which use of the second communication protocol is permitted, and
deciding, on a basis of the transmission enabled time assigned to a current time slot, whether or not to transmit the communication data by using the second communication protocol, and when the communication data are transmitted by use of the second communication protocol, storing a value obtained by subtracting the time used for transmission of the communication data by the second communication protocol from the transmission enabled time assigned to the current time slot as a remaining transmission enabled time assigned to the current time slot.

**Patentansprüche**

1. Eine Übertragungsvorrichtung (10, 11), umfassend:

eine erste Kommunikationseinheit (101) zum Übertragen von Kommunikationsdaten mittels eines ersten Kommunikationsprotokolls;
eine zweite Kommunikationseinheit (102) zum Übertragen von Kommunikationsdaten mittels eines zweiten Kommunikationsprotokolls, das sich von dem ersten Kommunikationsprotokoll unterscheidet, wobei das zweite Kommunikationsprotokoll eine Regel aufweist, dass in einer vorbestimmten Übertragungseinschränkung-Verwaltungsperiode Kommunikationsdaten nur innerhalb eines vorbestimmten Übertragungszeitlimits übertragen werden können;
eine Planungseinheit (120) zum Bestimmen eines oberen Grenzwerts für eine Zeit, während welcher der zweiten Kommunikationseinheit (102) erlaubt ist, Kommunikationsdaten in der Übertragungsbeschränkung-Verwaltungsperiode derart zu übertragen, dass eine Gesamtübertragungszeit, aufgewendet bei der Übertragung von Kommunikationsdaten unter Verwendung der zweiten Kommunikationseinheit (102) in der Übertragungsbeschränkung-Verwaltungsperiode, das Übertragungszeitlimit nicht überschreitet;
eine Kommunikationsstatus-Überwachungseinheit (105) zum Überwachen, ob eine Übertragungszeitverzögerung eine vorbestimmte Entscheidungsreferenzzeit überschreitet oder nicht, wobei die Übertragungsverzögerungszeit eine Zeit ist, welche zum Beginnen einer Übertragung von Kommunikationsdaten durch die erste Kommunikationseinheit (101) benötigt wird; und
eine Übertragungsbefehlseinheit (130) zum Anweisen der zweiten Kommunikationseinheit (102), anhängige Kommunikationsdaten zu übertragen, wenn die Kommunikationsstatus-Überwachungseinheit (105) feststellt, dass die Übertragungsverzögerungszeit die Entscheidungsreferenzzeit überschreitet und die durch die zweite Kommunikationseinheit (102) benötigte Gesamtzeit zum Übertragen der Kommunikationsdaten den bestimmten oberen Grenzwert nicht überschreitet.

2. Übertragungsvorrichtung (10, 11) gemäß Anspruch 1, wobei die Planungseinheit (120) eine Übertragung-ermöglicht-Zeit-Zuordnungseinheit (107) aufweist, welche die Übertragungsbeschränkung-Verwaltungsperiode in eine Vielzahl von Zeitabschnitten teilt und in jedem der Vielzahl von Zeitabschnitten eine Übertragung-ermöglicht-Zeit zuordnet, bei welcher eine Verwendung der zweiten Kommunikationseinheit (102) zugelassen ist, und die Übertragungsbefehlseinheit (130) weiter umfasst:

eine Übertragung-ermöglicht-Zeit-Verwaltungseinheit (108) zum Speichern der Übertragung-ermöglicht-Zeiten, zugeordnet durch die Übertragung-ermöglicht-Zeit-Zuordnungseinheit (107), Entscheiden, wenn die Kommunikationsstatus-Überwachungseinheit (105) feststellt, dass die Übertragung-Verzögerungszeit die Entscheidungsreferenzzeit überschreitet, auf einer Basis der einem aktuellen Zeitabschnitt zugeordneten Übertragung-ermöglicht-Zeit, , ob die zweite Kommunikationseinheit (102) zu verwenden ist oder nicht, und, wenn die Kommunikationsdaten unter Verwendung der zweiten Kommunikationseinheit übertragen wurden, Speichern eines Werts, erhalten durch Subtrahieren der durch die zweite Kommunikationseinheit zum Übertragen der Kommunikationsdaten verwendeten Zeit von der dem aktuellen Zeitabschnitt zugeordneten Übertragungermöglicht-Zeit als eine verbleibende Übertragung-ermöglicht-Zeit; und

eine Übertragungssteuereinheit (103) zum Anweisen der zweiten Kommunikationseinheit (102), die anhängigen Kommunikationsdaten zu übertragen, wenn die Übertragung-ermöglicht-Zeit-Verwaltungseinheit (108) entscheidet, die zweite Kommunikationseinheit zu verwenden.

**3.** Übertragungsvorrichtung (10, 11) gemäß Anspruch 1 oder 2, wobei die Übertragung-Verzögerungszeit eine Zeit ist, welche beginnt, wenn eine Anweisung zum Übertragen der Kommunikationsdaten an die erste Kommunikationseinheit (101) gesendet ist, und endet, wenn die erste Kommunikationseinheit ein Trägerabtasten ausgeführt hat, bestimmt hat, dass eine Übertragung möglich ist, und damit beginnt, die Kommunikationsdaten zu übertragen, oder eine Zeit ist, welche beginnt, wenn die Anweisung zum Übertragen der Kommunikationsdaten an die erste Kommunikationseinheit gesendet ist, und endet, wenn die erste Kommunikationseinheit eine Antwort von einer Empfangsvorrichtung (30) empfängt.

**4.** Übertragungsvorrichtung (10, 11) gemäß einem der Ansprüche 1 bis 3, wobei, wenn die Kommunikationsstatus-Überwachungseinheit (105) feststellt, dass eine Übertragungsverzögerungszeit eine vorbestimmte Entscheidungsreferenzzeit überschritten hat, die Übertragung-ermöglicht-Zeit-Verwaltungseinheit (108) entscheidet, die zweite Kommunikationseinheit (102) zu verwenden, falls diese entscheidet, dass die zweite Kommunikationseinheit ein Übertragen der Kommunikationsdaten in einer verbleibenden Zeit, erhalten durch Subtrahieren der bereits bei einer Übertragung unter Verwendung der zweiten Kommunikationseinheit aufgewendeten Zeit während des aktuellen Zeitabschnitts von der Übertragung-ermöglicht-Zeit, zugeordnet zu dem aktuellen Zeitabschnitt, abschließen kann und entscheidet die zweite Kommunikationseinheit nicht zu verwenden, falls diese entscheidet, dass die zweite Kommunikationseinheit ein Übertragen der Kommunikationsdaten in der verbleibenden Zeit nicht abschließen kann.

**5.** Übertragungsvorrichtung (11) gemäß Anspruch 2, weiter umfassend eine Abgeschätzte-Zukünftige-Übertragungsanfragezeit-Berechnungseinheit (110) zum Vorhersagen von abgeschätzten Zeiten von zukünftigen Übertragungsanfragen, angebend Anfragen die zweite Kommunikationseinheit (102) für eine Übertragung von Kommunikationsdaten bei einem von einer Vielzahl von Punkten zu verwenden, bei welchen die Übertragungsvorrichtung nach der aktuellen Zeit oder in einem Intervall zwischen einem Paar von Punkten ankommen wird, wobei:

die Übertragung-ermöglicht-Zeit-Zuordnungseinheit (107) die Übertragung-ermöglicht-Zeiten zu der Vielzahl von Zeitabschnitten auf einer Basis von Ergebnissen von Vorhersagen, gemacht durch die Abgeschätzte-Zukünftige-Übertragungsanfragezeit-Berechnungseinheit (110), zuordnet.

**6.** Übertragungsvorrichtung (11) gemäß Anspruch 5, wobei die Abgeschätzte-Zukünftige-Übertragungsanfragezeit-Berechnungseinheit (110) die abgeschätzten Zeiten von zukünftigen Übertragungsanfragen, anfragend eine Verwendung der zweiten Kommunikationseinheit (102), auf einer Basis einer Kommunikationsumgebung an einem der Vielzahl von Punkten vorhersagt, bei welchem die Übertragungsvorrichtung nach der aktuellen Zeit oder in dem Intervall zwischen dem Paar der Punkte ankommen wird.

**7.** Übertragungsvorrichtung (11) gemäß Anspruch 6, wobei die Abgeschätzte-Zukünftige-Ubertragungsanfragezeit-Berechnungseinheit (110) die abgeschätzten Zeiten von zukünftigen Übertragungsanfragen, anfragend eine Verwendung der zweiten Kommunikationseinheit (102), auf einer Basis eines Zeitbereichs vorhersagt, bei welchem die Übertragungsvorrichtung bei der Kommunikationsumgebung ankommen wird.

**8.** Übertragungsvorrichtung (10) gemäß einem der Ansprüche 2 und 5 bis 7, wobei, wenn die verbleibende Zeit, erhalten durch Subtrahieren der bereits bei einer Übertragung unter Verwendung der zweiten Kommunikationseinheit (102) während des aktuellen Zeitabschnitts aufgewendeten Zeit von der Übertragung-ermöglicht-Zeit, zugeordnet zu dem aktuellen Zeitabschnitt, kürzer als eine vorbestimmte Referenzzeit ist, die Übertragung-ermöglicht-Zeit-Zuordnungseinheit (107) die Übertragung-ermöglicht-Zeiten neu einstellt, wodurch eine zusätzliche Zeit zu der Übertragung, ermöglicht-Zeit in dem aktuellen Zeitabschnitt derart hinzugefügt wird, dass eine Gesamtsumme der neuen Übertragung-ermöglicht-Zeiten, zugeordnet zu den Zeitabschnitten, in das Übertragungszeitlimit passt.

**9.** Übertragungsvorrichtung (10) gemäß einem der Ansprüche 2 und 5 bis 7, wobei die Übertragung-ermöglicht-Zeit-Zuordnungseinheit (107):

die Übertragung-ermöglicht-Zeiten derart zuordnet, dass eine Gesamtsumme der Übertragung-ermöglicht-Zeiten, zugeordnet innerhalb einer jeden Zeitabschnittsdauer, geringer als das Übertragungszeitlimit ist; und eine überschüssige Zeit, erhalten durch Subtrahieren der Gesamtzeit der Übertragung-ermöglicht-Zeiten von dem Übertragungszeitlimit, speichert; und

die zusätzliche Zeit hinzugefügt durch die Übertragung-ermöglicht-Zeit-Zuordnungseinheit (107) zu der Übertragung-ermöglicht-Zeit in der Zeitabschnittsdauer, wenn die verbleibende Zeit, erhalten durch Subtrahieren der bereits bei einer Übertragung unter Verwendung der zweiten Kommunikationseinheit (102) während des aktuellen Zeitabschnitts aufgewendeten Zeit von der Übertragung-ermöglicht-Zeit, zugeordnet zu dem aktuellen Zeitabschnitt, kürzer als die vorbestimmte Referenzzeit ist, innerhalb der überschüssigen Zeit ist.

10. Ein On-Board-Fahrzeugkommunikationssystem (1), umfassend:

die Übertragungsvorrichtung (11) gemäß einem der Ansprüche 1 bis 9;
eine Empfangsvorrichtung (30), aufweisend eine dritte Kommunikationseinheit (301) zum Empfangen von ersten Kommunikationsdaten, übertragen von der ersten Kommunikationseinheit (101) der Übertragungsvorrichtung (10) gemäß Anspruch 1, eine vierte Kommunikationseinheit (302) zum Empfangen von zweiten Kommunikationsdaten, übertragen von der zweiten Kommunikationseinheit (102) der Übertragungsvorrichtung (10) gemäß Anspruch 1, und eine Empfangssteuereinheit (303) zum Ausgeben entweder der Kommunikationsdaten, empfangen durch die dritte Kommunikationseinheit, oder der Kommunikationsdaten, empfangen durch die vierte Kommunikationseinheit, wenn Kommunikationsdaten mit identischem Inhalt durch die dritte Kommunikationseinheit (301) und vierte Kommunikationseinheit (302) empfangen sind; und
eine aktuelle-Position-Erfassungseinheit (111) zum Erfassen einer aktuellen Positionsinformation und Zuführen der aktuellen Positionsinformation zu der Übertragungsvorrichtung.

11. On-Bord-Fahrzeugkommunikationssystem (1) gemäß Anspruch 10, wobei die Empfangssteuereinheit (303) der Empfangsvorrichtung (30) bestimmt, ob die ersten Kommunikationsdaten, empfangen durch die dritte Kommunikationseinheit (301), identisch zu vorher empfangenen Kommunikationsdaten sind oder nicht, bestimmt, ob die zweiten Kommunikationsdaten, empfangen durch die vierte Kommunikationseinheit (302), identisch zu vorher empfangenen Kommunikationsdaten sind oder nicht, und, wenn entweder die ersten Kommunikationsdaten, empfangen durch die dritte Kommunikationseinheit, oder die zweiten Kommunikationsdaten, empfangen durch die vierte Kommunikationseinheit nicht identisch zu vorher empfangenen Kommunikationsdaten sind, die Kommunikationsdaten, empfangen durch die dritte Kommunikationseinheit oder die vierte Kommunikationseinheit, ausgibt.

12. Ein On-Bord-Fahrzeugkommunikationsverfahren, verwendet durch ein On-Bord-Fahrzeugkommunikationssystem (1), bei welchem eine Kommunikation zwischen einer Übertragungsvorrichtung (10, 11) und einer Empfangsvorrichtung (30) mittels eines ersten Kommunikationsprotokolls und eines zweiten Kommunikationsprotokolls ausgeführt wird, wobei das zweite Kommunikationsprotokoll eine Regel aufweist, dass in einer vorbestimmten Übertragungsbeschränkung-Verwaltungsperiode Kommunikationsdaten nur innerhalb eines vorbestimmten Übertragungszeitlimits übertragen werden können, wobei:

ein Übertragungsprozess in der Übertragungsvorrichtung (10, 11) umfasst
Übertragen der Kommunikationsdaten über das erste Kommunikationsprotokoll,
Bestimmen eines oberen Grenzwerts für eine Zeit, während welcher eine Übertragung der Kommunikationsdaten über das zweite Kommunikationsprotokoll in der Übertragungsbeschränkung-Verwaltungsperiode derart zugelassen ist, dass eine Gesamtübertragungszeit, aufgewendet bei der Übertragung von Kommunikationsdaten über das zweite Kommunikationsprotokoll in der Übertragungsbeschränkung-Verwaltungsperiode, das Übertragungszeitlimit nicht überschreitet,
Überwachen, ob eine Übertragungsverzögerungszeit eine vorbestimmte Entscheidungsreferenzzeit überschreitet oder nicht, wobei die Übertragungsverzögerungszeit eine Zeit ist, welche zum Beginnen einer Übertragung von Kommunikationsdaten über das erste Kommunikationsprotokoll benötigt wird, und
Übertragen der Kommunikationsdaten über das zweite Kommunikationsprotokoll, wenn die Übertragungsverzögerungszeit festgestellt hat, die Entscheidungsreferenzzeit zu überschreiten, und die Gesamtzeit, benötigt zum Übertragen der Kommunikationsdaten über das zweite Kommunikationsprotokoll, den vorbestimmten oberen Grenzwert nicht überschreitet; und
ein Empfangsprozess in der Empfangsvorrichtung (30) umfasst,
wenn Kommunikationsdaten mit identischem Inhalt über das erste Kommunikationsprotokoll und das zweite Kommunikationsprotokoll empfangen werden, Ausgeben entweder der Kommunikationsdaten, empfangen über das erste Kommunikationsprotokoll, oder der Kommunikationsdaten, empfangen über das zweite Kommunikationsprotokoll.

13. On-Bord-Fahrzeugkommunikationsverfahren gemäß Anspruch 12, wobei der Übertragungsprozess in der Übertragungsvorrichtung (10, 11) weiter umfasst

Teilen der Übertragungsbeschränkung-Verwaltungsperiode in eine Vielzahl von Zeitabschnitten und Zuordnen in jedem der Vielzahl von Zeitabschnitten einer Übertragung-ermöglicht-Zeit, bei welcher eine Verwendung des zweiten Kommunikationsprotokolls zugelassen ist,

und

Entscheiden, auf einer Basis der Übertragung-ermöglicht-Zeit, zugeordnet zu einem aktuellen Zeitabschnitt, ob die Kommunikationsdaten durch Verwenden des zweiten Kommunikationsprotokolls zu übertragen sind oder nicht, und, wenn die Kommunikationsdaten durch Verwenden des zweiten Kommunikationsprotokolls übertragen werden, Speichern eines Werts, erhalten durch Subtrahieren der Zeit, verwendet zum Übertragen der Kommunikationsdaten über das zweite Kommunikationsprotokoll, von der Übertragung-ermöglicht-Zeit, zugeordnet zu dem aktuellen Zeitabschnitt, als eine verbleibende Übertragung-ermöglicht-Zeit, zugeordnet zu dem aktuellen Zeitabschnitt.

**Revendications**

1. Dispositif de transmission (10, 11) comprenant :

une première unité de communication (101) pour transmettre des données de communication par un premier protocole de communication ;

une deuxième unité de communication (102) pour transmettre des données de communication par un deuxième protocole de communication qui diffère du premier protocole de communication, le deuxième protocole de communication ayant une règle selon laquelle, dans une période de gestion de restriction de transmission prédéterminée, les données de communication peuvent être transmises seulement dans une limite de temps de transmission prédéterminée ;

une unité de planification (120) pour déterminer une valeur limite supérieure pour un temps durant lequel la deuxième unité de communication (102) est autorisée à transmettre des données de communication dans la période de gestion de restriction de transmission de manière que le temps de transmission total utilisé dans la transmission de données de communication en utilisant la deuxième unité de communication (102) dans la période de gestion de restriction de transmission ne dépasse pas la limite de temps de transmission ;

une unité de surveillance d'état de communication (105) pour surveiller si un temps de retard de transmission dépasse ou non un temps de référence de décision prédéterminé, le temps de retard de transmission étant un temps pris par la première unité de communication (101) pour commencer une transmission de données de communication ; et

une unité de commande de transmission (130) pour donner instruction à la deuxième unité de communication (102) de transmettre des données de communication en attente quand l'unité de surveillance d'état de communication (105) trouve que le temps de retard de transmission dépasse le temps de référence de décision et que le temps total pris par la deuxième unité de communication (102) pour transmettre des données de communication ne dépasse pas la valeur limite supérieure déterminée.

2. Dispositif de transmission (10, 11) selon la revendication 1, dans lequel l'unité de planification (120) a une unité d'attribution de temps autorisé de transmission (107) qui divise la période de gestion de restriction de transmission en une pluralité de tranches temporelles et attribue , dans chacune de la pluralité de tranches temporelles, un temps autorisé de transmission dans lequel l'utilisation de la deuxième unité de communication (102) est permise, et l'unité de commande de transmission (130) comprend en outre :

une unité de gestion de temps autorisé de transmission (108) pour stocker les temps autorisés de transmission attribués par l'unité d'attribution de temps autorisé de transmission (107), décider, quand l'unité de surveillance d'état de communication (105) trouve que le temps de retard de transmission dépasse le temps de référence de décision, sur la base du temps autorisé de transmission attribué à une tranche temporelle courante , s'il faut utiliser ou non la deuxième unité de communication (102) et, quand les données de communication ont été transmises en utilisant la deuxième unité de communication, stocker une valeur obtenue en soustrayant le temps utilisé par la deuxième unité de communication pour transmettre les données de communication du temps autorisé de transmission attribué à la tranche temporelle courante comme temps autorisé de transmission restant ; et

une unité de commande de transmission (103) pour donner instruction à la deuxième unité de communication (102) de transmettre les données de communication en attente quand l'unité de gestion de temps autorisé de transmission (108) décide d'utiliser la deuxième unité de communication.

3. Dispositif de transmission (10, 11) selon la revendication 1 ou 2, dans lequel le temps de retard de transmission est un temps à partir du moment où une instruction de transmettre les données de communication est envoyée à la première unité de communication (101) jusqu'au moment où la première unité de communication a effectué une détection de porteuse, a déterminé que la transmission est possible et commence à transmettre les données de communication, ou un temps à partir du moment où une instruction de transmettre les données de communication est envoyée à la première unité de communication jusqu'au moment où la première unité de communication reçoit une réponse d'un dispositif de réception (30).

4. Dispositif de transmission (10, 11) selon l'une quelconque des revendications 1 à 3, dans lequel, quand l'unité de surveillance d'état de communication (105) trouve que le temps de retard de transmission a dépassé un temps de référence de décision prédéterminé, l'unité de gestion de temps autorisé de transmission (108) décide d'utiliser la deuxième unité de communication (102) si elle décide que la deuxième unité de communication peut finir de transmettre les données de communication dans le temps restant obtenu en soustrayant le temps déjà utilisé dans la transmission en utilisant la deuxième unité de communication au cours de la tranche temporelle courante du temps autorisé de transmission attribué à la tranche temporelle courant et décide de ne pas utiliser la deuxième unité de communication si elle décide que la deuxième unité de communication ne peut terminer de transmettre les données de communication dans le temps restant.

5. Dispositif de transmission (11) selon la revendication 2, comprenant en outre une unité de calcul de temps estimé de demande de transmission future (110) pour prédire des temps estimés de demandes de transmission futures indiquant des demandes pour utiliser la deuxième unité de communication (102) pour la transmission de données de communication dans l'un d'une pluralité de points auxquels le dispositif de transmission arrivera après le temps courant ou dans un intervalle entre une paire des points, dans lequel :

   l'unité d'attribution de temps autorisé de transmission (107) attribue les temps autorisés de transmission à la pluralité d'intervalles de temps sur la base de résultats de prédictions effectuées par l'unité de calcul de temps estimé de demande de transmission future (110).

6. Dispositif de transmission (11) selon la revendication 5, dans lequel l'unité de calcul de temps estimé de demande de transmission future (110) prédit les temps estimés de demandes de transmission futures demandant l'utilisation de la deuxième unité de communication (102) sur la base d'un environnement de communication dans l'un de la pluralité de points auxquels le dispositif de transmission arrivera après le temps courant ou dans l'intervalle entre la paire des points.

7. Dispositif de transmission (11) selon la revendication 6, dans lequel l'unité de calcul de temps estimé de demande de transmission future (110) prédit les temps estimés de demandes de transmission futures demandant l'utilisation de la deuxième unité de communication (102) sur la base d'une plage de temps dans laquelle le dispositif de transmission arrivera dans l'environnement de communication.

8. Dispositif de transmission (10) selon l'une quelconque des revendications 2 et 5 à 7, dans lequel, quand le temps restant obtenu en soustrayant le temps déjà utilisé dans la transmission en utilisant la deuxième unité de communication (102) durant la tranche temporelle courante du temps autorisé de transmission attribué à la tranche temporelle courante est plus court qu'un temps de référence prédéterminé, l'unité d'attribution de temps autorisé de transmission (107) réajuste les temps autorisés de transmission, en ajoutant ainsi un temps additionnel au temps autorisé de transmission dans la tranche temporelle courante , de telle manière que la somme totale des nouveaux temps autorisés de transmission attribués aux tranches temporelles s'ajuste dans la limite de temps de transmission.

9. Dispositif de transmission (10) selon l'une quelconque des revendications 2 et 5 à 7, dans lequel l'unité d'attribution de temps autorisé de transmission (107) :

   attribue les temps autorisés de transmission de manière que la somme totale des temps autorisés de transmission attribués dans chaque durée de tranche temporelle soit inférieure à la limite de temps de transmission ; et stocke un temps en excès obtenu en soustrayant la somme totale des temps autorisés de transmission de la limite de temps de transmission ; et
   le temps additionnel, ajouté par l'unité d'attribution de temps autorisé de transmission (107) au temps autorisé de transmission dans la durée de la tranche temporelle quand le temps restant obtenu en soustrayant le temps déjà utilisé dans la transmission en utilisant la deuxième unité de communication (102) durant la tranche temporelle courante du temps autorisé de transmission attribué à la tranche temporelle courante , est plus court que le temps de référence prédéterminé, est inclus dans le temps en excès.

10. Système de communication embarqué (1) comprenant :

le dispositif de transmission (11) selon l'une quelconque des revendications 1 à 9 ;
un dispositif de réception (30) ayant une troisième unité de communication (301) pour recevoir des premières données de communication transmises de la première unité de communication (101) du dispositif de transmission (10) de la revendication 1, une quatrième unité de communication (302) pour recevoir des deuxièmes données de communication transmises de la deuxième unité de communication (102) du dispositif de transmission (10) de la revendication 1, et une unité de commande de réception (303) pour, quand des données de communication de contenu identique sont reçues par la troisième unité de communication (301) et la quatrième unité de communication (302), délivrer soit les données de communication reçues par la troisième unité de communication, soit les données de communication reçues par la quatrième unité de communication ; et une unité d'acquisition de position présente (111) pour acquérir des informations de position courante et fournir les informations de position courante au dispositif de transmission.

11. Système de communication embarqué (1) selon la revendication 10, dans lequel l'unité de commande de réception (303) du dispositif de réception (30) détermine si les premières données de communication reçues par la troisième unité de communication (301) sont ou non identiques à des données de communication reçues précédemment, détermine si les deuxièmes données de communication reçues par la quatrième unité de communication (302) sont ou non identiques à des données de communication reçues précédemment et, quand soit les premières données de communication reçues par la troisième unité de communication, soit les deuxièmes données de communication reçues par la quatrième unité de communication ne sont pas identiques à des données de communication reçues précédemment, délivre les données de communication reçues par la troisième unité de communication ou la quatrième unité de communication.

12. Procédé de communication embarqué utilisé par un système de communication embarqué (1) dans lequel une communication entre un dispositif de transmission (10, 11) et un dispositif de réception (30) est exécutée par un premier protocole de communication et un deuxième protocole de communication, le deuxième protocole de communication ayant une règle selon laquelle, dans une période de gestion de restriction de transmission prédéterminée, des données de communication peuvent être transmises seulement dans une limite de temps de transmission prédéterminée, dans lequel :

un processus de transmission dans le dispositif de transmission (10, 11) comprend :

la transmission des données de communication par le premier protocole de communication,
la détermination d'une valeur limite supérieure pour un temps durant lequel une transmission de données de communication par le deuxième protocole de communication est autorisée dans la période de gestion de restriction de transmission de manière que le temps de transmission total utilisé dans la transmission de données de communication par le deuxième protocole de communication dans la période de gestion de restriction de transmission ne dépasse pas la limite de temps de transmission,
la surveillance du fait qu'un temps de retard de transmission dépasse ou non un temps de référence de décision prédéterminé, le temps de retard de transmission étant un temps pris pour qu'une transmission de données de communication par le premier protocole de communication commence, et
la transmission des données de communication par le deuxième protocole de communication quand l'on trouve que le temps de retard de transmission dépasse le temps de référence de décision et que le temps total pris pour transmettre des données de communication par le deuxième protocole de communication ne dépasse pas la valeur limite supérieure prédéterminée ; et
un processus de réception dans le dispositif de réception (30) comprend,
quand des données de communication de contenu identique sont reçues par le premier protocole de communication et le deuxième protocole de communication, la délivrance soit des données de communication reçues par le premier protocole de communication, soit des données de communication reçues par le deuxième protocole de communication.

13. Procédé de communication embarqué selon la revendication 12, dans lequel
le processus de transmission dans le dispositif de transmission (10, 11) comprend en outre :

la division de la période de gestion de restriction de transmission en une pluralité de tranches temporelles et l'attribution, dans chacune de la pluralité de tranches temporelles, d'un temps autorisé de transmission dans lequel l'utilisation du deuxième protocole de communication est permise,

et

la décision, sur la base du temps autorisé de transmission attribué à une tranche temporelle courante , du fait de transmettre ou non les données de communication en utilisant le deuxième protocole de communication et, quand les données de communication sont transmises par l'utilisation du deuxième protocole de communication, le stockage d'une valeur obtenue en soustrayant le temps utilisé pour la transmission des données de communication par le deuxième protocole de communication du temps autorisé de transmission attribué à la tranche temporelle courante comme temps autorisé de transmission restant attribué à la tranche temporelle courante.

# FIG. 1

EP 2 833 667 B1

# FIG. 2

10

| 109 | 105 |
|---|---|
| DECISION REFERENCE TIME ADJUSTMENT UNIT | COMMUNICATION STATUS MONITORING UNIT |

104

TRANSMIT DATA OUTPUT UNIT

103

TRANSMISSION CONTROL UNIT

101

1ST COMMUNICATION UNIT

106

COMMUNICATION CHANNEL INSTRUCTION UNIT

102

2ND COMMUNICATION UNIT

108

TRANSMISSION ENABLED TIME MANAGEMENT UNIT

TRANSMISSION COMMAND UNIT

130

107

TRANSMISSION ENABLED TIME ASSIGNMENT UNIT

120

SCHEDULING UNIT

# FIG. 3

START DATA TRANSMISSION

IDENTIFY CURRENT TIME SLOT — S1

TRANSMISSION DELAY TIME > DECISION REFERENCE TIME? — S2 — NO

YES

USE 2ND COMMUNICATION UNIT IN CURRENT TIME SLOT? — S3 — NO

YES — S4

USE 2ND COMMUNICATION UNIT IN CURRENT TIME SLOT TO TRANSMIT DATA

S6

USE 1ST COMMUNICATION UNIT TO TRANSMIT DATA

UPDATE REMAINING TRANSMISSION ENABLED TIME IN CURRENT TIME SLOT — S5

S7

YES — ANY MORE DATA TO TRANSMIT?

NO

END

## FIG. 4

| TIME SLOT NUMBER | TIME SLOT STARTING TIME (HOUR:MINUTE) | TIME SLOT ENDING TIME (HOUR:MINUTE) | REMAINING TRANSMISSION ENABLED TIME PER TIME SLOT (SECONDS) |
|---|---|---|---|
| 1 | 8:00 | 8:01 | 6. 000 |
| 2 | 8:01 | 8:02 | 6. 000 |
| 3 | 8:02 | 8:03 | 6. 000 |
| ⋮ | ⋮ | ⋮ | ⋮ |
| 59 | 8:58 | 8:59 | 6. 000 |
| 60 | 8:59 | 9:00 | 6. 000 |

## FIG. 5

| TIME SLOT NUMBER | TIME SLOT STARTING TIME (HOUR:MINUTE) | TIME SLOT ENDING TIME (HOUR:MINUTE) | REMAINING TRANSMISSION ENABLED TIME PER TIME SLOT (SECONDS) |
|---|---|---|---|
| 1 | 8:00 | 8:01 | 5. 990 |
| 2 | 8:01 | 8:02 | 6. 000 |
| 3 | 8:02 | 8:03 | 6. 000 |
| ⋮ | ⋮ | ⋮ | ⋮ |
| 59 | 8:58 | 8:59 | 6. 000 |
| 60 | 8:59 | 9:00 | 6. 000 |

## FIG. 6

| TIME SLOT NUMBER | TIME SLOT STARTING TIME (HOUR:MINUTE) | TIME SLOT ENDING TIME (HOUR:MINUTE) | REMAINING TRANSMISSION ENABLED TIME PER TIME SLOT (SECONDS) |
|---|---|---|---|
| 1 | 8:00 | 8:01 | 0. 000 |
| 2 | 8:01 | 8:02 | 6. 000 |
| 3 | 8:02 | 8:03 | 6. 000 |
| ⋮ | ⋮ | ⋮ | ⋮ |
| 59 | 8:58 | 8:59 | 6. 000 |
| 60 | 8:59 | 9:00 | 6. 000 |

## FIG. 7

| TIME SLOT NUMBER | TIME SLOT STARTING TIME (HOUR:MINUTE) | TIME SLOT ENDING TIME (HOUR:MINUTE) | REMAINING TRANSMISSION ENABLED TIME PER TIME SLOT (SECONDS) |
|---|---|---|---|
| 1 | 8:01 | 8:02 | 6. 000 |
| 2 | 8:02 | 8:03 | 6. 000 |
| 3 | 8:03 | 8:04 | 6. 000 |
| ⋮ | ⋮ | ⋮ | ⋮ |
| 59 | 8:59 | 9:00 | 6. 000 |
| 60 | 9:00 | 9:01 | 6. 000 |

## FIG. 8

| TIME SLOT NUMBER | TIME SLOT STARTING TIME (HOUR:MINUTE) | TIME SLOT ENDING TIME (HOUR:MINUTE) | REMAINING TRANSMISSION ENABLED TIME PER TIME SLOT (SECONDS) |
|---|---|---|---|
| 1 | 9:00 | 9:01 | 6. 000 |
| 2 | 9:01 | 9:02 | 6. 000 |
| 3 | 9:02 | 9:03 | 6. 000 |
| ⋮ | ⋮ | ⋮ | ⋮ |
| 59 | 9:58 | 9:59 | 6. 000 |
| 60 | 9:59 | 10:00 | 6. 000 |

# FIG. 9

# FIG. 10

RECEIVE COMMUNICATION DATA

S101 — EXTRACT IDENTIFICATION INFORMATION OF COMMUNICATION DATA

S102 — QUERY PREVIOUSLY RECEIVED DATA INFORMATION STORAGE UNIT TO FIND OUT WHETHER THE IDENTIFICATION INFORMATION OF THE COMMUNICATION DATA IS ALREADY STORED

S103 — ALREADY STORED?

YES (STORED)

NO (NOT STORED)

S104 — OUTPUT COMMUNICATION DATA TO RECEIVED DATA INPUT UNIT

S105 — DISCARD COMMUNICATION DATA

END PROCESSING

# FIG. 11

# FIG. 12

| FUTURE ESTIMATED POSITION REFERENCE TABLE | | |
|---|---|---|
| POSITION | ARRIVAL TIME (HOUR : MINUTE) | DEPARTURE TIME (HOUR : MINUTE) |
| POINT 01 | 07:57 | 08:00 |
| POINT 02 | 08:20 | 08:23 |
| POINT 03 | 08:43 | 08:46 |
| POINT 04 | 09:00 | 09:03 |
| ⋮ | ⋮ | ⋮ |

FIG. 13

DISTANCE FROM
PRESENT POSITION
(km)

POINT 04

54

POINT 03

40

POINT 02

20

POINT 01

0

INTERVAL E

INTERVAL D
2ND STATION

INTERVAL C

INTERVAL B
1ST STATION

INTERVAL A

ELAPSED TIME
FROM PRESENT
TIME (MINUTES)

0    10    20  23    30    40  43  46  50    60

20 MINUTES    3 MINUTES    20 MINUTES    3 MINUTES    14 MINUTES

EP 2 833 667 B1

35

## FIG. 14

| POSITION OF TRANSMIT-TING DEVICE | DISTANCE FROM PRESENT POSITION | ESTIMATED AMOUNT OF DATA TO BE TRANSMITTED FROM TRANSMITTING DEVICE PO | PROPORTION OF ESTIMATED AMOUNT OF COMMUNICATION DATA FOR WHICH IT IS ESTIMATED THAT TRANSMISSION BY 2ND COMMUNICATION UNIT WILL BE REQUESTED Q | ESTIMATED AMOUNT OF COMMUNICATION DATA FOR WHICH IT IS ESTIMATED THAT TRANSMISSION BY 2ND COMMUNICATION UNIT WILL BE REQUESTED P1 | BIT RATE OF COMMUNICATION DATA FOR WHICH IT IS ESTIMATED THAT TRANSMISSION BY 2ND COMMUNICATION UNIT WILL BE REQUESTED R | ESTIMATED FUTURE TRANSMISSION REQUEST TIME (NECESSARY TRANSMISSION TIME IN EACH TIME SLOT) T |
|---|---|---|---|---|---|---|
| INTERVAL A | 0 – 20 km | 1200Kbit | 10 % | 120Kbit | 100 bps | 0.6 s |
| INTERVAL B | 20 km | 1800Kbit | 50 % | 900Kbit | 5 Kbps | 30 s |
| INTERVAL C | 20 – 40 km | 1200Kbit | 10 % | 120Kbit | 100 bps | 0.6 s |
| INTERVAL D | 40 km | 1800Kbit | 50 % | 900Kbit | 5 Kbps | 30 s |
| INTERVAL E | 40 – 54 km | 840Kbit | 10 % | 84Kbit | 100 bps | 0.6 s |

TOTAL 2964Kbit    MAXIMUM 3600Kbit

EP 2 833 667 B1

# FIG. 15

| POSITION OF TRANSMITTING DEVICE | TIME SLOT NUMBER | TIME SLOT STARTING TIME (HOUR:MINUTE) | TIME SLOT ENDING TIME (HOUR:MINUTE) | REMAINING TRANSMISSION ENABLED TIME ASSIGNED TO EACH TIME SLOT (SECOND) |
|---|---|---|---|---|
| | 1 | 8:00 | 8:01 | 0. 6 |
| INTERVAL A | ⋮ | ⋮ | ⋮ | ⋮ |
| | 20 | 8:19 | 8:20 | 0. 6 |
| | 21 | 8:20 | 8:21 | 30. 0 |
| INTERVAL B | ⋮ | ⋮ | ⋮ | ⋮ |
| | 23 | 8:22 | 8:23 | 30. 0 |
| | 24 | 8:23 | 8:24 | 0. 6 |
| INTERVAL C | ⋮ | ⋮ | ⋮ | ⋮ |
| | 43 | 8:42 | 8:43 | 0. 6 |
| | 44 | 8:43 | 8:44 | 30. 0 |
| INTERVAL D | ⋮ | ⋮ | ⋮ | ⋮ |
| | 46 | 8:45 | 8:46 | 30. 0 |
| | 47 | 8:46 | 8:47 | 0. 6 |
| INTERVAL E | ⋮ | ⋮ | ⋮ | ⋮ |
| | 60 | 8:59 | 9:00 | 0. 6 |

## FIG. 16

| POSITION OF TRANSMIT-TING DEVICE | DISTANCE FROM PRESENT POSITION | ESTIMATED AMOUNT OF DATA TO BE TRANSMITTED FROM TRANSMITTING DEVICE P0 | PROPORTION OF ESTIMATED AMOUNT OF COMMUNICATION DATA FOR WHICH IT IS ESTIMATED THAT TRANSMISSION BY 2ND COMMUNICATION UNIT WILL BE REQUESTED Q | ESTIMATED AMOUNT OF COMMUNICATION DATA FOR WHICH IT IS ESTIMATED THAT TRANSMISSION BY 2ND COMMUNICATION UNIT WILL BE REQUESTED P1 | BIT RATE OF COMMUNICATION DATA FOR WHICH IT IS ESTIMATED THAT TRANSMISSION BY 2ND COMMUNICATION UNIT WILL BE REQUESTED R | ESTIMATED FUTURE TRANSMISSION REQUEST TIME (NECESSARY TRANSMISSION TIME IN EACH TIME SLOT) T |
|---|---|---|---|---|---|---|
| INTERVAL A | 0 – 20 km | 1200Kbit | 1 % | 12Kbit | 10 bps | 0.06 s |
| INTERVAL B | 20 km | 1800Kbit | 5 % | 90Kbit | 0.5 Kbps | 3 s |
| INTERVAL C | 20 – 40 km | 1200Kbit | 1 % | 12Kbit | 10 bps | 0.06 s |
| INTERVAL D | 40 km | 1800Kbit | 5 % | 90Kbit | 0.5 Kbps | 3 s |
| INTERVAL E | 40 – 54 km | 840Kbit | 1 % | 8.4Kbit | 10 bps | 0.06 s |

EP 2 833 667 B1

**EP 2 833 667 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004257412 A
- US 2012079149 A1